# FASCICULE DE BREVET EUROPEEN

(11) **EP 3 671 270 B1**
(45) Date de publication et mention de la délivrance du brevet: **01.06.2022**
(21) Numéro de dépôt: 19214968.0
(22) Date de dépôt: 10.12.2019
(51) Int. Cl.: G01S 13/935, G01S 13/933, G01S 13/48, G01S 7/03

(54) **PROCEDE ET SYSTEME RADAR DE PROXIMITE POUR AERONEF A VOILURE TOURNANTE**
ABSTANDSRADAR-VERFAHREN UND -SYSTEM FÜR DREHFLÜGEL-LUFTFAHRZEUG
PROXIMITY RADAR METHOD AND SYSTEM FOR A ROTARY WING AIRCRAFT

(30) Priorité: 20.12.2018 FR 1873471
(43) Date de publication de la demande: 24.06.2020
(73) Titulaire: Thales, 92400 Courbevoie (FR)
(72) Inventeur: VEYRAC, Yoan, 33701 Merignac Cedex (FR); INCONSTANTE, Jérémy, 33701 Merignac Cedex (FR); GARREC, Patrick, 33701 Merignac Cedex (FR); MONTIGNY, Richard, 33701 Merignac Cedex (FR); CORNIC, Pascal, 29238 Brest (FR)
(74) Mandataire: Marks & Clerk France

(56) Documents cités:
- EP-A1- 0 568 427
- EP-A1- 2 293 101
- DE-A1- 10 036 131

## Description

La présente invention concerne un procédé et un système radar de proximité pour aéronef à voilure tournante.

Le domaine technique de l'invention est celui des systèmes radar et de leur utilisation pour la détection d'obstacles de proximité et l'anticollision par des hélicoptères et plus généralement par des aéronefs à voilure tournante.

Le contexte de l'invention concerne la sécurité de navigation à bord d'hélicoptères. La plupart des accidents d'hélicoptères sont causés par des collisions qui surviennent lors de phases de décollage, d'atterrissage, lors de vol en stationnaire ou à faible vitesse ou bien lors de déplacements à proximité d'obstacles comme des falaises ou des immeubles. Le risque est encore plus important lorsque les conditions environnementales sont dégradées et que la visibilité du pilote s'en trouve réduite, par exemple en raison de la nuit, de la pluie, d'un brouillard ou d'un nuage de poussières.

Afin de réduire significativement le risque de collision, il existe ainsi un besoin d'un équipement ou système de détection des obstacles qui fonctionne quelles que soient les conditions extérieures.

Cet équipement doit être à même de fournir à l'équipage une vision de proximité panoramique, quelles que soient les conditions de visibilité optique, afin d'être alerté suffisamment tôt d'un danger de collision.

Cet équipement doit être également compatible avec les contraintes exigeantes relatives à son installation sur l'hélicoptère, ce qui inclut des exigences en termes de masse, de consommation, d'encombrement, de positionnement et de coût.

En outre, la fonction réalisée par l'équipement doit disposer d'un angle de couverture très important avec un temps de rafraichissement suffisamment court pour permettre d'anticiper au mieux les dangers de collision possibles, en particulier lors des manœuvres à proximité directe d'obstacles.

Pour répondre au problème de détection de proximité et de manière connue, plusieurs solutions techniques existent à ce jour.

Une première technique repose sur l'utilisation de données GPS (en anglais « Global Positioning System » pour localiser le porteur, associée à une carte numérique de terrain qui localise les obstacles potentiels. Cette solution présente l'avantage de n'utiliser qu'un récepteur GPS, généralement disponible par ailleurs. Néanmoins, des inconvénients majeurs du système GPS existent tels que la résolution trop grossière et le temps de rafraichissement trop élevé du positionnement. Même si ces inconvénients peuvent être surmontés par des données provenant de la centrale de navigation, reste l'inconvénient de la faible robustesse du système GPS, qui peut être brouillé ou indisponible dans certaines zones. Par ailleurs, ce système repose sur des modèles de terrain qui ne sont pas nécessairement à jour, ou qui peuvent manquer de précision. En particulier, les véhicules ou les installations temporaires n'y sont pas référencées, ce qui pose un problème de fiabilité du système à l'encontre de ces obstacles non répertoriés. Ainsi, les systèmes basés sur des cartes et l'utilisation d'un positionnement par GPS présentent des faiblesses au niveau de l'intégrité du positionnement et de l'exhaustivité des cartes.

Une deuxième technique connue consiste à mettre en œuvre des capteurs laser pour réaliser une cartographie optique des abords de l'hélicoptère. Cette solution présente l'inconvénient de ne pas fonctionner par conditions de visibilité réduite, comme par exemple en temps de brouillard, de pluie, ou bien dans la direction du soleil.

Une troisième technique regroupe les systèmes à base de capteurs radars, qui permettent d'obtenir une cartographie même lorsque la visibilité optique est faible.

Les systèmes à base de radars à balayage mécanique ne permettent pas de respecter le compromis temps de rafraîchissement court sur un domaine de balayage étendu.

Dans les systèmes à base de radars statiques, sont distinguées d'une part les installations mettant en œuvre des radars à balayage électronique, et d'autre part les installations reposant sur l'utilisation d'un grand nombre de senseurs ou capteurs radar statiques.

Les systèmes à base de balayage électronique réalisent une cartographie en balayant l'espace périphérique de l'hélicoptère. Lorsque l'application d'anticollision souhaitée nécessite une couverture angulaire très importante, la figure de balayage réalisée présente un temps de rafraichissement long, ou bien un temps d'illumination court dans chaque direction de l'espace. Ainsi, l'utilisation d'un balayage électronique sur une couverture angulaire très importante est difficile à concilier avec l'exigence de l'application souhaitée selon laquelle un temps de rafraichissement court, et un temps d'illumination le plus long possible pour bénéficier d'une mesure précise de la vitesse Doppler sont requis. Il est rappelé que la mesure de la vitesse Doppler permet d'obtenir une meilleure cartographie de l'environnement et de mieux identifier et anticiper les dangers potentiels.

Les systèmes radar, basés sur la mise en place en périphérie de l'hélicoptère d'un nombre important de capteurs statiques permettent d'obtenir une couverture permanente de l'espace. Néanmoins, l'obtention d'une résolution angulaire fine implique l'utilisation d'un grand nombre de capteurs. La pluralité des capteurs impacte le prix et la facilité d'installation et d'intégration sur le porteur. Une alternative consiste à utiliser des antennes à formation de faisceaux par le calcul. Ces antennes possèdent plusieurs voies de réception distinctes. Il est alors possible d'émettre et de recevoir dans une grande portion de l'espace. La numérisation de chacune des voies de réception individuelle permet de former des faisceaux simultanément, a posteriori, par traitement numérique. Le compromis entre la taille du domaine de couverture et la résolution angulaire du système se traduit par le nombre de voies distinctes à numériser et à traiter, ce qui impacte la complexité et le coût de cette solution au premier chef.

Le document EP2293101A1 divulgue un radar aéroporté multifonction fonctionnant en modes actif et passif, comprenant une pluralité de modules d'antennes d'émission et/ou de réception fixes vis-à-vis de l'aéronef et disposés sensiblement en surface de l'aéronef et formant des faisceaux en émission et en réception de largeur et de caractéristiques adaptées à la direction visée, permettant la détection de cibles pour la mise en œuvre d'une fonctionnalité de détection et évitement d'obstacles.

Un premier problème technique que résout l'invention est de diminuer la complexité d'un procédé et système radar de proximité pour aéronef à voilure tournante, le système radar couvrant un large domaine angulaire à surveiller et ayant un rafraichissement rapide nécessaire à l'efficacité du système.

Un deuxième problème technique que résout l'invention est de diminuer le nombre de capteurs radar et de voies d'émission et/ou de réception indépendantes du système radar de proximité pour aéronef à voilure tournante, le système radar couvrant un large domaine angulaire à surveiller et ayant un rafraichissement rapide nécessaire à l'efficacité du système.

Un troisième problème technique que résout l'invention est de diminuer la masse et l'encombrement et/ou augmenter la faculté d'intégration du système radar de proximité pour aéronef à voilure tournante, le système radar couvrant un large domaine angulaire à surveiller et ayant un rafraichissement rapide nécessaire à l'efficacité du système.

A cet effet, l'invention a pour objet un procédé radar de proximité pour aéronef à voilure tournante, mis en œuvre par un système radar de proximité comprenant au moins un senseur radar comportant : un panneau antennaire, formé d'un nombre entier N supérieur ou égal à 2, de secteurs de réception et au moins un secteur(s) émission ; et N voies de réception, configurées pour démoduler indépendamment, puis numériser respectivement les N secteurs de réception ; et une voie d'émission, configurée pour moduler une forme d'onde émission radar sur une porteuse radar à émettre par l'au moins un secteur(s) émission ; et un calculateur électronique, configuré pour mette en œuvre des traitements radar de proximité et une fusion des données de cartes direction/distances ; et un afficheur pour afficher la situation de proximité de l'aéronef ; les N secteurs de réception étant répartis autour d'un point central O de concours prédéterminé ; et chacun des N secteurs de réception ayant un même nombre NK, supérieur ou égal à 2, de groupes rayonnants unitaires dont la position varie en azimut et/ou en élévation entre le point central O et la périphérie de leur secteur, et pointant vers une même direction de pointage avec un diagramme de rayonnement identique.

Le procédé radar de proximité comprend une séquence de phases T(k) d'étapes, exécutées successivement en fonction de k, k variant de 1 à NK, dans laquelle : chaque phase T(k) d'étapes consiste en ce que le calculateur électronique fait activer suivant un motif interférométrique M(k) associé au rang k, à raison d'un groupe rayonnant par secteur réception, N groupes rayonnants actifs associés audit motif interférométrique M(k), dont la position varie en azimut et/ou en élévation en fonction du rang temporel k entre le point central 0 et la périphérie de leur secteur sans repasser par une même position, de façon à produire corrélativement des diagrammes synthétiques lors d'une formation de faisceaux réception par calcul avec une largeur de lobe et l'apparition d'un nombre de lobes de réseaux qui varient en fonction du rang temporel k, et de façon à établir une cartographie de rang k de l'environnement en termes de cases distance/direction azimut et/ou distance/direction élévation dans laquelle les ambiguïtés d'obstacle(s) détecté(s), associées aux lobes de réseaux sont levées grâces au(x) cartographie(s) fournie(s) dans la ou les phases précédent et/ou suivant la phase T(k).

Suivant des modes particuliers de réalisation, le procédé radar de proximité comprend l'une ou plusieurs des caractéristiques suivantes, prises isolément ou en combinaison :
- les N secteurs de réception sont répartis angulairement autour d'un point central O de concours prédéterminé ; et chacun des N secteurs de réception comporte un même nombre NK, supérieur ou égal à 2, de groupes rayonnants unitaires qui s'écartent en azimut et/ou en élévation vers la périphérie de leur secteur, et pointant vers une même direction de pointage avec un diagramme de rayonnement identique ; et la séquence de phases T(k) d'étapes du procédé radar de proximité, k variant de 1 à NK, est caractérisé en ce que : dans une première phase T(1), le calculateur électronique fait activer suivant un premier motif interférométrique M(1), à raison d'un groupe rayonnant actif par secteur réception, N groupes rayonnants actifs, les plus proches du point central O de concours des secteurs de réception, de façon à obtenir des diagrammes synthétiques non ambigus lors d'une formation de faisceaux réception par calcul ; puis dans les phases suivantes T(k) d'étapes, exécutées successivement selon l'ordre croissant de k, pour k variant de 2 à NK, la phase T(k) d'étapes consiste en ce que le calculateur électronique fait activer suivant un motif interférométrique M(k) associé au rang k, à raison d'un groupe rayonnant par secteur réception, N groupes rayonnants actifs associés audit motif M(k), écartés en azimut et/ou en élévation d'autant plus que le rang temporel k est grand, de façon à produire corrélativement des diagrammes synthétiques lors d'une formation de faisceaux réception par calcul avec une largeur de lobe, deux fois moindre que celle des lobes du motif précédent M(k-1), et l'apparition d'un nombre de lobes de réseaux égal à 2 fois 2k-1, et de façon à établir une cartographie de rang k de l'environnement en termes de cases distance/direction azimut et/ou distance/direction élévation dans laquelle les ambiguïtés d'obstacle(s) détecté(s), associées aux lobes de réseaux sont levées grâces au(x) cartographie(s) fournie(s) dans la ou les phases précédent la phase T(k) ;
- pour chaque phase T(k) d'étapes, k variant de 1 à NK, le calculateur électronique exécute une première étape, une deuxième étape, et une troisième étape; la première étape, exécutée au cours de la phase T(k), consistant en ce que le calculateur électronique fait activer N groupes rayonnants unitaires associés à un motif interférométrique M(k), dans lequel pour k égal à 1, le premier motif M(1) est formé des N groupes rayonnants actifs, à raison d'un groupe rayonnant actif par secteur réception, les plus proches du point central O de concours des secteurs de réception, et pour k compris entre 2 et NK, le motif d'ordre k, M(k), est formé des N groupes rayonnants actifs, à raison d'un groupe rayonnant actif par secteur réception, plus proches voisins qui s'écartent simultanément en azimut et en élévation des groupes rayonnants actifs du précédent motif M(k-1) ; et les signaux reçus par les N secteurs de réception associés au motif M(k) sont démodulés et numérisés indépendamment sur les voies numérisées correspondantes et fournis au calculateur électronique ; et la deuxième étape, exécutée au cours de la phase T(k), k étant compris entre 1 et NK, consistant en ce que deux faisceaux synthétiques sont formés par calcul par le calculateur électronique à partir des signaux des N secteurs démodulés et numérisés en combinant lesdits N signaux des secteurs de réception par des déphasages adaptés, 2*(2k-1) lobes de réseau étant créées dans lesdits faisceaux synthétiques à partir d'un rang k égal à 2 ; et la troisième étape, exécutée au cours de la phase T(k), consistant en ce que le calculateur établit à partir des faisceaux synthétiques calculés pour le motif M(k) de rang k une cartographie de rang k de l'environnement en termes de cases distance/direction azimut exprimée en cosinus directeur et/ou distance/direction élévation exprimée en cosinus directeur et direction/distance et fusionne la cartographie de rang k avec la cartographie de rang précédent k-1 lorsque k est supérieur ou égal à 2 pour lever d'éventuelles ambigüités d'obstacle(s) détecté(s) ;
- le procédé radar de proximité défini ci-dessus comprend en outre une étape d'affichage exécutée après la troisième étape de chaque phase T(k) à partir d'un rang k prédéterminé supérieur ou égal à 2, dans laquelle l'afficheur est configuré pour afficher la situation de proximité de l'aéronef, une mise en évidence des dangers en approche, et des alertes ;
- au moins un secteur d'émission est inclus dans les secteurs réception et le radar de proximité fonctionne dans un mode mono-statique ; ou au moins un secteur d'émission est séparé et distant des secteurs réception et le radar de proximité fonctionne dans un mode bi-statique ;
- lorsque le radar fonctionne dans un mode bi-statique, au moins un groupe rayonnant unitaire émission, configuré(s) pour pointer dans la même direction de pointage que celle des groupes rayonnants unitaires des secteurs réception et ayant le même diagramme de rayonnement, est activé de manière statique ; et/ou au moins deux groupes rayonnants unitaires émission configuré(s) pour pointer dans la même direction de pointage que celle des groupes rayonnants unitaires des secteurs réception et ayant le même diagramme de rayonnement, sont activés de manière dynamique, en faisant circuler l'activation des groupes rayonnants actifs suivant au moins un vecteur(s) de circulation.

L'invention a également pour objet un système radar de proximité pour aéronef à voilure tournante comprenant au moins un senseur radar comportant : un panneau antennaire, formé d'un nombre entier N supérieur ou égal à 2, de secteurs réception et au moins un secteur(s) émission ; et N voies de réception, configurées pour démoduler indépendamment, puis numériser respectivement les N secteurs de réception ; et une voie d'émission, configurée pour moduler une forme d'onde émission radar sur une porteuse radar à émettre par l'au moins secteur(s) émission ; un calculateur électronique, configuré pour mettre en œuvre des traitements radar de proximité et une fusion des données de cartes direction/distances ; et un afficheur pour afficher la situation de proximité de l'aéronef ; les N secteurs de réception étant repartis autour d'un point central O de concours prédéterminé ; et chacun des N secteurs réception ayant un même nombre NK, supérieur ou égal à deux, de groupes rayonnants unitaires dont la position varie en azimut et/ou en élévation entre le point central O et la périphérie de leur secteur, et pointant vers une même direction de pointage avec un diagramme de rayonnement identique.

Le calculateur électronique est configuré pour mettre en œuvre un procédé radar de proximité en exécutant une séquence de phases T(k) d'étapes, k variant de 1 à NK, dans laquelle chaque phase T(k) d'étapes consiste en ce que le calculateur électronique fait activer suivant un motif interférométrique M(k) associé au rang k, à raison d'un groupe rayonnant par secteur réception, N groupes rayonnants actifs associés audit motif interférométrique M(k), dont la position varie en azimut et/ou en élévation en fonction du rang temporel k, de façon à produire corrélativement des diagrammes synthétiques lors d'une formation de faisceaux réception par calcul avec une largeur de lobe et l'apparition d'un nombre de lobes de réseaux qui varient en fonction du rang temporel k, et de façon à établir une cartographie de rang k de l'environnement en termes de cases distance/direction azimut et/ou distance/direction élévation dans laquelle les ambiguïtés d'obstacle(s) détecté(s), associées aux lobes de réseaux sont levées grâces au(x) cartographie(s) fournie(s) dans la ou les phases précédent et/ou suivant la phase T(k).

Suivant des modes particuliers de réalisation, le système radar de proximité comprend l'une ou plusieurs des caractéristiques suivantes, prises isolément ou en combinaison :
- les N secteurs de réception sont répartis angulairement autour d'un point central O de concours prédéterminé ; et chacun des N secteurs réception ayant un même nombre NK, supérieur ou égal à deux, de groupes rayonnants unitaires qui s'écartent en azimut et/ou en élévation vers la périphérie de leur secteur pointant vers une même direction de pointage avec un diagramme de rayonnement identique ; et la séquence de phases T(k) d'étapes, k variant de 1 à NK, est mise en œuvre en débutant par une première phase T(1) au cours de laquelle le calculateur fait activer suivant un premier motif interférométrique M(1), à raison d'un groupe rayonnant actif par secteur réception, N groupes rayonnants actifs, les plus proches du point central O de concours des secteurs de réception, de façon à obtenir des diagrammes synthétiques non ambigus lors d'une formation de faisceaux réception par calcul ; puis en exécutant successivement, pour k variant de 2 à NK, les phases T(k), la phase T(k) d'étapes consistant en ce que le calculateur électronique fait activer suivant un motif interférométrique M(k) associé au rang k, à raison d'un groupe rayonnant par secteur réception, N groupes rayonnants actifs associés audit motif M(k), écartés en azimut et/ou en élévation d'autant plus que le rang temporel k est grand, de façon à produire corrélativement des diagrammes synthétiques lors d'une formation de faisceaux réception par calcul avec une largeur de lobe, deux fois moindre que celle des lobes du motif précédent M(k-1), et l'apparition d'un nombre de lobes de réseaux égal à 2 fois 2k-1, et d'établir une cartographie de l'environnement en termes de cases distance/direction azimut et/ou distance/direction élévation dans laquelle les ambiguïtés d'obstacle(s) détecté(s), associées aux lobes de réseaux sont levées grâces au(x) cartographie(s) fournie(s) dans la ou les phases précédent la phase T(k) ;
- chaque groupe rayonnant unitaire des N secteurs réception est formé d'un unique élément rayonnant, tous les éléments rayonnants des N secteurs de réception ayant un diagramme de rayonnement identiques ; ou chaque groupe rayonnant unitaire des N secteurs réception est formé d'un même nombre NJ, supérieur ou égal à 2, d'éléments rayonnants, les éléments rayonnants étant espacés entre eux de moins d'une longueur d'onde *λ* de la porteuse radar ;
- chaque groupe rayonnant unitaire des N secteurs réception est formé d'un même nombre NJ, supérieur ou égal à 2, d'éléments rayonnants, les éléments rayonnants étant espacés entre eux de moins d'une longueur d'onde *λ* de la porteuse radar, et tous les groupes rayonnants unitaires sont orientés de manière identique sur le panneau antennaire ; et les éléments rayonnants formant chaque groupe rayonnant unitaire sont déphasés entre eux par un même réseau de déphaseurs, connectés en parallèle à un même circuit de sommation, de la voie du secteur réception auquel appartient le groupe rayonnant unitaire ;
- chaque groupe rayonnant unitaire des N secteurs réception est formé de deux éléments rayonnants, espacés entre eux de moins d'une longueur d'onde *λ* de la porteuse radar, et alignés entre eux sur le panneau antennaire suivant son axe d'élévation ; et les deux éléments rayonnants formant chaque groupe rayonnant unitaire sont déphasés entre eux par un même angle Δ*α* de sorte que tous les groupes rayonnant pointent vers une même direction ayant un angle d'élévation non nul et un angle azimut nul ;

- les NK groupes rayonnants unitaires de chaque secteur de réception sont disposés régulièrement et sensiblement le long de la bissectrice dudit secteur de réception en partant d'une zone proche du point central O et en allant vers la périphérique dudit secteur de réception ;
- au moins un secteur d'émission est inclus dans les secteurs réception et le système radar de proximité est mono-statique ; ou au moins un secteur d'émission est séparé et distant des secteurs réception et le système radar de proximité fonctionne est bi-statique ;
- le système radar est bi-statique ; et au moins un groupe rayonnant unitaire émission, configuré(s) pour pointer dans la même direction de pointage que celle des groupes rayonnants unitaires des secteurs réception et ayant le même diagramme de rayonnement, est ou sont activé(s) de manière statique ; et/ou au moins deux groupes rayonnants unitaires émission, configuré(s) pour pointer dans la même direction de pointage que celle des groupes rayonnants unitaires des secteurs réception et ayant le même diagramme de rayonnement, sont activés de manière dynamique, en faisant circuler l'activation des groupes rayonnants actifs suivant au moins un vecteur(s) de circulation ;
- le calculateur électronique est configuré pour exécuter dans chaque phase T(k) d'étapes, k variant de 1 à Nk, une première étape, une deuxième étape, et une troisième étape ; la première étape, exécutée au cours de la phase T(k), consistant en ce que le calculateur électronique fait activer N groupes rayonnants unitaires associés à un motif interférométrique M(k), dans lequel pour k égal à 1, le premier motif M(1) est formé des N groupes rayonnants actifs, à raison d'un groupe rayonnant actif par secteur réception, les plus proches du point central O de concours des secteurs de réception, et pour k compris entre 2 et NK, le motif d'ordre k, M(k), est formé des N groupes rayonnants actifs, à raison d'un groupe rayonnant actif par secteur réception, plus proches voisins qui s'écartent en azimut et/ou en élévation des groupes rayonnants actifs du précédent motif M(k-1) ; et les signaux reçus par les N secteurs de réception associés au motif M(k) sont démodulés et numérisés indépendamment sur les voies numérisées correspondantes et fournis au calculateur électronique ; et la deuxième étape, exécutée au cours de la phase T(k), k étant compris entre 1 et NK, consistant en ce que deux faisceaux synthétiques sont formés par calcul par le calculateur électronique à partir des signaux des N secteurs démodulés et numérisés en combinant lesdits N signaux des secteurs de réception par des déphasages adaptés, 2*(2k-1) lobes de réseau étant créées dans lesdits faisceaux synthétiques à partir d'un rang k égal à 2; et la troisième étape, exécutée au cours de la phase T(k), consistant en ce que le calculateur établit à partir des faisceaux synthétiques calculés pour le motif M(k) de rang k une cartographie de rang k de l'environnement en termes de cases distance/direction azimut exprimée en cosinus directeur et/ou distance/direction élévation exprimée en cosinus directeur et direction/distance et fusionne la cartographie de rang k avec la cartographie de rang précédent k-1 lorsque k est supérieur ou égal à 2 pour lever d'éventuelles ambigüités d'obstacle(s) détecté(s) ;
- l'afficheur est configuré pour afficher la situation de proximité de l'aéronef, une mise en évidence des dangers en approche, et des alertes ;
- le système radar de proximité défini ci-dessus comprend trois senseurs radar identiques, disposés autour du porteur de l'aéronef de sorte à former une bulle de protection du porteur.

L'invention sera mieux comprise à la lecture de la description de plusieurs formes de réalisation qui va suivre, donnée uniquement à titre d'exemple et faite en se référant aux dessins sur lesquels :
[Fig. 1] est une vue de l'architecture d'un système radar de proximité selon un première forme de réalisation de l'invention ;
[Fig. 2] est une vue d'un procédé radar de proximité selon un premier mode de réalisation de l'invention, mis en œuvre par le système radar de proximité de la Figure 1 ;
[Fig. 3] une vue de l'architecture d'un système radar de proximité selon une deuxième forme de réalisation ;
[Fig. 4] est une vue explicative de l'architecture générale d'un groupement rayonnant unitaire ;
[Fig. 5] est une vue d'un procédé radar de proximité selon un deuxième mode de réalisation de l'invention, mis en œuvre par le système radar de proximité de la Figure 3 ;
[Fig. 6] est une vue d'un panneau antennaire d'un senseur radar d'un système radar de proximité selon une troisième forme de réalisation dans laquelle le radar de proximité est bi-statique ;
[Fig. 7] est une vue d'un panneau antennaire d'un senseur radar d'un système radar de proximité selon une variante de la troisième forme de réalisation dans laquelle l'émission est circulante ;
[Fig. 8] est une vue de l'architecture fonctionnelle d'un senseur radar d'un système radar de proximité selon une quatrième forme de réalisation qui généralise la troisième forme de réalisation du système radar de proximité décrit partiellement sur la Figure 6 ;
[Fig. 9] est une vue d'un ordinogramme d'un procédé radar de proximité généralisant les procédés radar de proximité des premier et deuxième mode de réalisation décrits respectivement dans les Figures 2 et 5, et mis en œuvre par le système radar de proximité de la Figure 8.

Un système radar de proximité selon l'invention pour aéronef à voilure tournante, comme par exemple un hélicoptère, est fondé sur un changement dynamique du diagramme de rayonnement synthétique en réception du radar. Cette technique repose sur une modification de cartographie des éléments rayonnants activés au cours du temps. Cela permet successivement d'accéder à plusieurs cartographies, en partant d'une résolution angulaire grossière et sans ambigüités, et en allant vers une résolution angulaire plus fine mais avec des ambigüités de réseau. La combinaison des cartographies successives obtenues par formation de faisceaux par le calcul donne accès à la résolution angulaire fine tout en levant les ambigüités. Cette technique permet d'illuminer et de traiter le domaine de couverture complet en permanence, avec un faible nombre de voies de réception.

Ainsi le système radar de proximité selon l'invention permet de couvrir un large domaine angulaire avec un temps de rafraichissement faible tout en assurant un temps d'illumination long permettant de réaliser un traitement Doppler efficace.

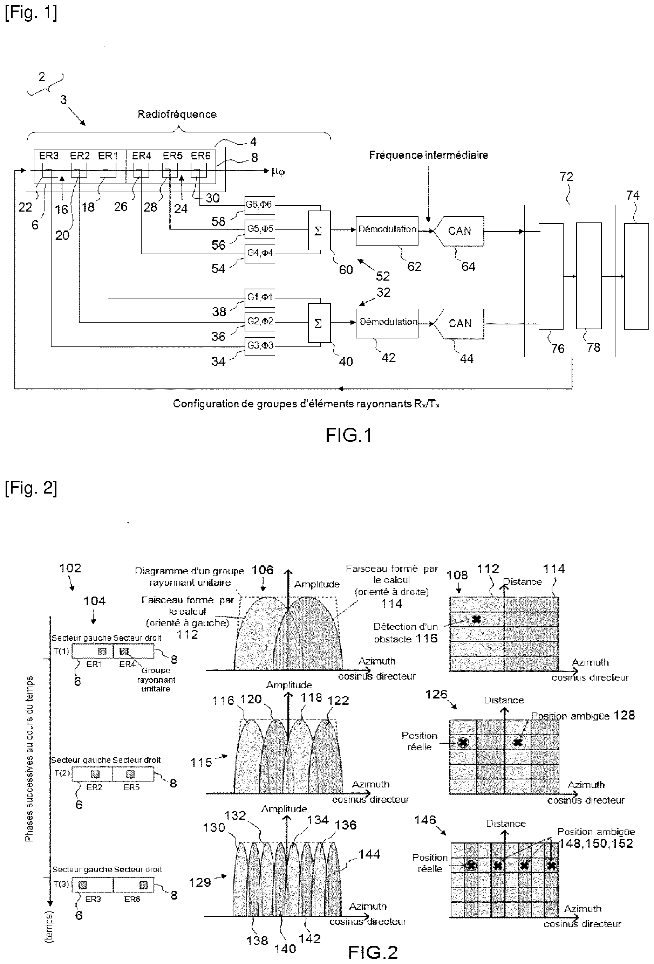

Suivant la Figure 1 et un premier mode de réalisation d'un système radar de proximité selon l'invention, donné à titre d'exemple pour illustrer de manière simple l'invention, un système radar de proximité 2 comprend un senseur radar 3 ayant un panneau antennaire 4 formant ici une antenne radar émission-réception qui possède deux secteurs distincts de réception 6, 8, adjacents entre eux et étendus chacun selon un axe azimut u_{ϕ} de l'antenne 4. Le premier secteur de réception 6, situé à gauche sur le Figure 1 est dénommé par « secteur gauche » tandis que le deuxième secteur de réception 8, situé à droite sur la Figure 1, est dénommé par « secteur droit ».

Le secteur gauche de réception 6 comporte un premier ensemble 16 d'éléments rayonnants, ici trois éléments rayonnants 18, 20, 22 désignés par ER1, ER2, ER3 de droite à gauche sur la Figure 1.

Le secteur droit de réception 8 comporte un deuxième ensemble 24 d'éléments rayonnants, ici trois éléments rayonnants 26, 28, 30, désignés par ER4, ER5, ER6 de gauche à droite sur la Figure 1.

Chaque élément rayonnant est considéré ici comme étant un groupe rayonnant unitaire, ici limité à un seul élément unitaire.

De manière générale, un groupe rayonnant unitaire est un ensemble de petite taille d'un même nombre entier NJ prédéterminé non nul d'éléments rayonnants, agencés selon un même motif prédéterminé et couvrant localement une zone de taille réduite par rapport à taille d'un secteur, les éléments rayonnants du groupement rayonnant unitaire étant espacés entre eux de moins d'une longueur d'onde de la porteuse radar.

Des groupes de rayonnement unitaire à deux éléments rayonnants (NJ égal à 2) seront envisagés ultérieurement pour une deuxième forme de réalisation du système radar de proximité et une justification de la définition du groupe de rayonnement unitaire sera fournie.

Chaque élément rayonnant d'un même secteur de réception est activable, par exemple au travers de l'allumage/coupure de son alimentation ou tout autre moyen, et connecté à un circuit de sommation analogique au travers d'un circuit d'amplification/atténuation et/ou déphasage.

Le senseur de réception 3 comporte une première voie gauche de numérisation 32 du secteur gauche 6 ayant trois circuits analogiques gauche d'amplification/atténuation et de déphasage contrôlables 34, 36, 38, un circuit de sommation gauche radiofréquence 40, un démodulateur gauche 42 à une fréquence intermédiaire, et un circuit gauche 44 de conversion analogique/numérique CAN.

Les éléments rayonnants ER1, ER2, ER3 du secteur gauche de réception 6 sont connectés via trois entrées au circuit de sommation gauche radiofréquence 40 respectivement au travers des circuits analogiques gauche d'amplification/atténuation et de déphasage contrôlables 34, 36, 38.

Le démodulateur gauche 42 à une fréquence intermédiaire est connecté entre le circuit de sommation gauche radiofréquence 40, disposé en amont vers le secteur de réception gauche 6, et le circuit gauche 44 de conversion analogique/numérique CAN.

Le senseur de réception 3 comporte une deuxième voie droite de numérisation 52 du secteur droit 8 ayant trois circuits analogiques droit d'amplification/atténuation et de déphasage contrôlables 54, 56, 58, un circuit de sommation droit radiofréquence 60, un démodulateur droit 62 à une fréquence intermédiaire, et un circuit droit 64 de conversion analogique/numérique CAN.

Les éléments rayonnants ER4, ER5, ER6 du secteur droit de réception 8 sont connectés via trois entrées au circuit de sommation droit radiofréquence 60 respectivement au travers des circuits analogiques droit d'amplification/atténuation et de déphasage contrôlables 54, 56, 58.

Le démodulateur droit 62 à une fréquence intermédiaire est connecté entre le circuit de sommation droit radiofréquence 60, disposé en amont vers le secteur de réception droit 8, et le circuit droit 64 de conversion analogique/numérique CAN.

Le senseur de réception 3 comporte un calculateur électronique 72 pour des traitements radar et une fusion des données permettant la détection d'obstacles et de danger de collisions, et un afficheur 74.

Le calculateur électronique 72 comporte un premier module 76 pour les traitements radar et un deuxième module 78 pour la fusion des données.

Le premier module 76 est configuré pour mettre en œuvre une formation de faisceaux de réception par calcul, un filtrage distance et un filtrage Doppler.

Le deuxième module 78 est configuré pour établir et fusionner des cartes direction/distance.

L'afficheur 74 est configuré pour mettre en œuvre un affichage de la situation de proximité de l'aéronef et une mise en évidence des dangers en approche et des alertes.

Suivant la Figure 2, un procédé radar de proximité 102 selon un premier mode de réalisation de l'invention, mis en œuvre par le système radar de proximité de la Figure 1, comprend un ensemble de phases temporelles, parcourues successivement suivant un rang d'ordre entier croissant, ici trois phases désignées par T(1), T(2), T(3), d'activation de groupes rayonnants unitaires à raison d'un groupe rayonnant unitaire par secteur de réception de l'antenne de réception et par phase, suivant un motif de répartition géométrique autour du point central O de l'antenne de réception, ici le long d'un axe azimutal, la distance au point central O et l'écart mutuel entre les groupes rayonnants unitaires d'un même motif augmentant lorsque l'ordre de la phase temporelle augmente.

Au cours de la phase T(1), dans une première étape 104, les signaux radar reçus par les deux secteurs distincts gauche et droit de l'antenne réception sont numérisés indépendamment et respectivement sur les première et deuxième voies numérisées.

Le groupe rayonnant unitaire 18, constitué ici par l'élément rayonnant ER1 et associé au secteur gauche de réception, et le groupe rayonnant unitaire 26, constitué ici par l'élément rayonnant ER4, sont tous deux actifs et forment le premier motif de la première phase T(1).

Le diagramme de rayonnement de chaque groupe rayonnant unitaire ER1, ER4 est identique et il couvre un large domaine angulaire.

Après numérisation, dans une deuxième étape 106, les diagrammes reçus des groupes rayonnants unitaires ER1 et ER4 sont combinés pour former des faisceaux par le calcul. Au cours de la première phase T(1), le diagramme résultant des deux secteurs combinés est un faisceau large. En fonction du déphasage relatif appliqué aux deux voies, le faisceau résultant peut être orienté. On peut donc former, en parallèle, deux faisceaux larges distincts 112, 114, respectivement à gauche et à droite du domaine de couverture.

Pour chacun des deux faisceaux 112, 114, dans une troisième étape 108, un certain nombre de cases-distance sont déclinés dont la taille dépend de la bande passante du signal radar utilisé, ici cinq cases par faisceaux. L'intensité des retours dans chacune de ces cases et pour chacun des faisceaux permet de détecter les obstacles potentiels, avec une résolution angulaire grossière, ici un obstacle détecté 116 sur la quatrième case-distance du faisceau gauche.

Puis, au cours de la deuxième phase T(2), le premier motif d'activation est remplacé par un deuxième motif d'activation dans lequel Le groupe rayonnant unitaire 20, constitué ici par l'élément rayonnant ER2 et associé au secteur gauche de réception, et le groupe rayonnant unitaire 28, constitué ici par l'élément rayonnant ER5, sont tous deux actifs. Les première, deuxième, troisième étapes 104, 106, 108 sont alors appliquées en utilisant ce deuxième motif dans lequel les éléments rayonnants ER2 et ER5 sont plus espacés. Un deuxième diagramme résultant est obtenu à la sortie de la deuxième étape 106 dans lequel deux lobes 116, 118 d'un premier faisceau orienté à gauche et deux lobes 120, 122 d'un deuxième faisceau orienté à droite sont entrelacés, ce qui permet d'affiner la résolution angulaire de détection du système radar de proximité. Dans la troisième étape 108, une deuxième cartographie 126 de l'environnement est obtenue dans laquelle les ambigüités associées aux lobes de réseau, ici une unique position ambigüe 128, est levée grâce à la première cartographie déterminée dans la troisième étape de première phase T(1).

Ensuite, au cours de la troisième phase T(3), le deuxième motif d'activation est remplacé par un troisième motif d'activation dans lequel Le groupe rayonnant unitaire 22, constitué ici par l'élément rayonnant ER3 et associé au secteur gauche de réception 6, et le groupe rayonnant unitaire 30, constitué ici par l'élément rayonnant ER6, sont tous deux actifs. Les première, deuxième, troisième étapes 104, 106, 108 sont alors appliquées à nouveau en utilisant ce troisième motif dans lequel les éléments rayonnants ER3 et ER6 sont encore plus espacés. Un troisième diagramme résultant 129 est obtenu à la sortie de la deuxième étape 106 dans lequel quatre lobes 130, 132, 134, 136 d'un premier faisceau, orienté à gauche, et quatre lobes 138, 140, 142, 144 d'un deuxième faisceau, orienté à droite, sont entrelacés, ce qui permet d'affiner la résolution angulaire de détection du système radar de proximité. Dans la troisième étape 108, une troisième cartographie 146 de l'environnement est obtenue dans laquelle les ambigüités associées aux lobes de réseau, ici trois positions ambigües 148, 150, 152, sont levées grâce aux première et deuxième cartographies déterminées dans les première et deuxième phases T(1), T(2).

Ainsi, en utilisant un nombre réduit de motifs interférométriques sur l'antenne réception du système radar 2 et une formation de faisceaux par calcul, le procédé radar de proximité 102 selon l'invention parvient à affiner au fur et à mesure du parcours d'un nombre limité de phases d'activation la résolution angulaire du système radar de proximité et à lever les ambigüités associés aux lobes de réseau créés grâce aux cartographies établies dans les phases précédentes.

Afin d'obtenir le domaine de couverture souhaité plusieurs senseurs radar peuvent être disposés autour du porteur. Chaque panneau pouvant traiter de larges secteurs angulaires, théoriquement jusqu'à un demi-espace pour un panneau plat, le nombre de senseurs à installer reste modeste.

Certaines applications ou phases de vol nécessitent une couverture angulaire un peu plus restreinte. On peut par exemple privilégier une couverture vers le haut pour l'anti collision des pales, qui est préférentiellement utilisée lors des phases quasi-stationnaires. A contrario, la phase d'atterrissage requiert plutôt une couverture vers le sol. Afin d'améliorer les performances de cartographie dans ces cas particuliers, on peut restreindre le domaine de couverture en modifiant la topologie du groupe rayonnant unitaire.

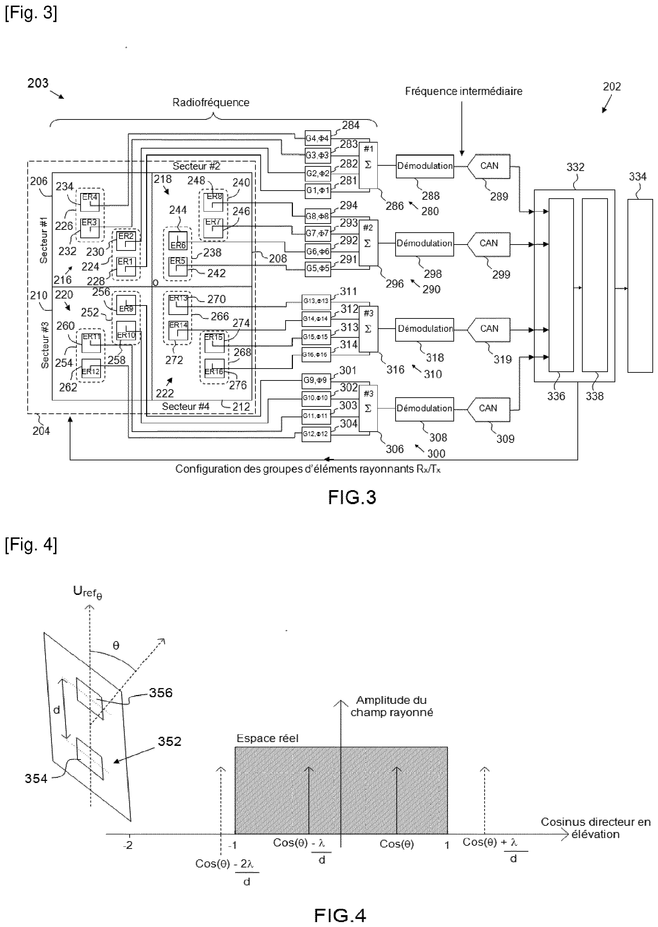

Suivant la Figure 3 et un deuxième mode de réalisation d'un système radar de proximité selon l'invention, un système radar de proximité 202 comprend un senseur radar 203 ayant un panneau antennaire 204 formant ici une antenne radar émission-réception qui possède quatre secteurs distincts de réception 206, 208, 210, 212 répartis angulairement autour d'un point central et étendus chacun selon une direction azimutale *u_{ϕ}* et une direction d'élévation *u_{θ}.*

Un premier secteur de réception 206, un deuxième secteur de réception 208, un troisième de réception 210, un quatrième secteur de réception 212, situés respectivement en haut à gauche, en haut à droite, en bas à gauche, en bas à droite par rapport au point central O du panneau antennaire 204 sur la Figure 3, sont désignés respectivement par « secteur 1 », « secteur 2 », « secteur 3 » et « secteur 4 ».

Les premier, deuxième, troisième et quatrième secteurs de réception 206, 208, 210, 212 comportent respectivement des premier, deuxième, troisième, quatrième ensembles 216, 218, 220, 222 distincts d'éléments rayonnants.

Le premier secteur de réception 206, comprend ici quatre éléments rayonnants 228, 230, 232, 234 désignés respectivement par ER1, ER2, ER3, ER4, regroupés ici en deux groupements rayonnants unitaires 224, 226, illustrés chacun par un contour pointillé.

Un premier groupement rayonnant unitaire Gr1 226 regroupe les deux éléments rayonnants ER1, ER2 tandis qu'un deuxième groupement rayonnant unitaire Gr2 226 regroupe les deux éléments rayonnants ER3, ER4.

Les premier et deuxième groupements rayonnants unitaires 224, 226, mutuellement séparés sont disposés selon une première trajectoire centrifuge qui s'écarte du point central 0 en azimut et en élévation vers le coin supérieur gauche du premier secteur 206 sur la Figure 3.

Le deuxième secteur de réception 208, comprend ici quatre éléments rayonnants 242, 244, 246, 248 désignés respectivement par ER5, ER6, ER7, ER8, regroupés ici en deux groupements rayonnants unitaires 238, 240, illustrés chacun par un contour pointillé.

Un troisième groupement rayonnant unitaire Gr3 238 regroupe les deux éléments rayonnants ER5, ER6 tandis qu'un quatrième groupement rayonnant unitaire Gr4 240 regroupe les deux éléments rayonnants ER7, ER8.

Les troisième et quatrième groupements rayonnants unitaires 238, 240, mutuellement séparés sont disposés selon une deuxième trajectoire centrifuge qui s'écarte du point central 0 en azimut et en élévation vers le coin supérieur droit du deuxième secteur 208 sur la Figure 3.

Le troisième secteur de réception 210, comprend ici quatre éléments rayonnants 256, 258, 260, 262, désignés respectivement par ER9, ER10, ER11, ER12, regroupés ici en deux groupements rayonnants unitaires 252, 254, illustrés chacun par un contour pointillé.

Un cinquième groupement rayonnant unitaire Gr5 252 regroupe les deux éléments rayonnants ER9, ER10 tandis qu'un sixième groupement rayonnant unitaire Gr6 254 regroupe les deux éléments rayonnants ER11, ER12.

Les cinquième et sixième groupements rayonnants unitaires 252, 254, mutuellement séparés sont disposés selon une troisième trajectoire centrifuge qui s'écarte du point central O en azimut et en élévation vers le coin inférieur gauche du troisième secteur 210 sur la Figure 3.

Le quatrième secteur de réception 212, comprend ici quatre éléments rayonnants 270, 272, 274, 276, désignés respectivement par ER13, ER14, ER15, ER16, regroupés ici en deux groupements rayonnants unitaires 266, 268, illustrés chacun par un contour pointillé.

Un septième groupement rayonnant unitaire Gr7 266 regroupe les deux éléments rayonnants ER13, ER14 tandis qu'un huitième groupement rayonnant unitaire Gr8 268 regroupe les deux éléments rayonnants ER15, ER16.

Les septième et huitième groupements rayonnants unitaires 266, 268, mutuellement séparés sont disposés selon une quatrième trajectoire centrifuge qui s'écarte du point central O en azimut et en élévation vers le coin inférieur droit du quatrième secteur 212 sur la Figure 3.

Il est rappelé que de manière générale, un groupe rayonnant unitaire est un ensemble, de petite taille d'un même nombre entier NJ prédéterminé non nul d'éléments rayonnants, agencés selon un même motif prédéterminé et couvrant localement une zone de taille réduite par rapport à taille d'un secteur, les éléments rayonnants du groupement rayonnant unitaire étant espacés entre eux de moins d'une longueur d'onde de la porteuse radar.

Ici sur la Figure 3, des groupes rayonnants unitaires à deux éléments rayonnants (NJ égal à 2) sont considérés pour la deuxième forme de réalisation du système radar de proximité.

Suivant la Figure 4, le comportement d'un groupement rayonnant unitaire ayant au moins deux éléments rayonnants, alignés ici selon un axe *U_{refθ}* de pointage en élévation *θ*, est analysé en termes d'apparition de lobes de réseau dans l'espace réel lorsque le rapport de la longueur d'onde *λ* de la porteuse du radar sur l'espacement d entre deux éléments rayonnants immédiatement voisins varie. L'analyse faite ici pour un groupement rayonnant unitaire 352 à deux éléments rayonnants 354, 356 reste valide pour un groupement rayonnant unitaire ayant un nombre G d'éléments rayonnants strictement supérieur à 2.

La direction de pointage en élévation étant supposé donné par l'angle (*θ*), les lobes de réseau effectifs sont ceux qui apparaissent dans l'espace réel sont situés à cos(*θ*) + *k* ∗ *λ*/*d*, k étant un entier relatif.

Si les éléments rayonnants sont espacés d'une distance d inférieure à *λ*, il n'y a pas de lobes de réseau dans l'espace réel pour un pointage à la normale de l'antenne, c'est-à-dire *θ* = π/2 ou cos(*θ*) = 0 , mais un lobe apparait lorsque *θ* est différent de 0.

Si les éléments rayonnants sont espacés d'une distance d de moins de *λ*/2, il n'y a pas de lobes de réseau dans l'espace réel, et cela quelle que soit la valeur de *θ*.

Ainsi, il est supposé dans la présente invention que lorsqu'un groupement rayonnant unitaire est formé d'au moins deux éléments rayonnants, ces derniers sont espacés entre eux de moins d'une longueur d'onde *λ* de la porteuse radar, de façon à éviter la présence de lobes de réseau lorsque le pointage *θ* est à la normale de l'antenne radar, ce qui est le cas nominal lorsque l'on veut éclairer tout l'espace environnant.

En revenant à la Figure 3, chaque élément rayonnant des secteurs de réception 206, 208, 210, 212 est activable, par exemple au travers de l'allumage/coupure de son alimentation ou tout autre moyen, et connecté à un circuit de sommation analogique au travers d'un circuit d'amplification/atténuation et/ou déphasage.

Le senseur de réception 203 comporte une première voie de numérisation 280 du premier secteur 206 ayant quatre premiers circuits analogiques d'amplification/atténuation et de déphasage contrôlables 281, 282, 283, 284, un premier circuit de sommation radiofréquence 286, un premier démodulateur 288 à une fréquence intermédiaire, et un premier circuit 289 de conversion analogique/numérique CAN.

Les éléments rayonnants ER1, ER2, ER3, ER4 du premier secteur de réception 206 sont connectés via quatre premières entrées au premier circuit de sommation radiofréquence 286 respectivement au travers des premiers circuits analogiques d'amplification/atténuation et de déphasage contrôlables 281, 282, 283, 284.

Le premier démodulateur 288 à une fréquence intermédiaire est connecté entre le premier circuit de sommation radiofréquence 286, disposé en amont vers le premier secteur de réception 206, et le premier circuit de conversion analogique/numérique CAN 289.

Le senseur de réception 203 comporte une deuxième voie de numérisation 290 du deuxième secteur 208 ayant quatre deuxièmes circuits analogiques d'amplification/atténuation et de déphasage contrôlables 291, 292, 293, 294, un deuxième circuit de sommation radiofréquence 296, un deuxième démodulateur 298 à une fréquence intermédiaire, et un deuxième circuit de conversion analogique/numérique CAN 299.

Les éléments rayonnants ER5, ER6, ER7, ER8 du deuxième secteur de réception 208 sont connectés via quatre deuxièmes entrées au deuxième circuit de sommation radiofréquence 296 respectivement au travers des deuxièmes circuits analogiques d'amplification/atténuation et de déphasage contrôlables 291, 292, 293, 294.

Le deuxième démodulateur 298 à une fréquence intermédiaire est connecté entre le deuxième circuit de sommation radiofréquence 296, disposé en amont vers le deuxième secteur de réception 208, et le deuxième circuit de conversion analogique/numérique 299.

Le senseur de réception 203 comporte une troisième voie de numérisation 300 du troisième secteur 210 ayant quatre troisièmes circuits analogiques d'amplification/atténuation et de déphasage contrôlables 301, 302, 303, 304, un troisième circuit de sommation radiofréquence 306, un troisième démodulateur 308 à une fréquence intermédiaire, et un troisième circuit de conversion analogique/numérique CAN 309.

Les éléments rayonnants ER9, ER10, ER11, ER12 du troisième secteur de réception 210 sont connectés via quatre troisièmes entrées au troisième circuit de sommation radiofréquence 306 respectivement au travers des troisièmes circuits analogiques d'amplification/atténuation et de déphasage contrôlables 301, 302, 303, 304.

Le troisième démodulateur 308 à une fréquence intermédiaire est connecté entre le troisième circuit de sommation radiofréquence 306, disposé en amont vers le troisième secteur de réception 210, et le troisième circuit de conversion analogique/numérique 309.

Le senseur de réception 203 comporte une quatrième voie de numérisation 310 du quatrième secteur 212 ayant quatre quatrièmes circuits analogiques d'amplification/atténuation et de déphasage contrôlables 311, 312, 313, 314, un quatrième circuit de sommation radiofréquence 316, un quatrième démodulateur 318 à une fréquence intermédiaire, et un quatrième circuit de conversion analogique/numérique CAN 319.

Les éléments rayonnants ER13, ER14, ER15, ER16 du quatrième secteur de réception 212 sont connectés via quatre quatrièmes entrées au quatrième circuit de sommation radiofréquence 316 respectivement au travers des quatrièmes circuits analogiques d'amplification/atténuation et de déphasage contrôlables 311, 312, 313, 314.

Le quatrième démodulateur 318 à une fréquence intermédiaire est connecté entre le quatrième circuit de sommation radiofréquence 316, disposé en amont vers le quatrième secteur de réception 212, et le quatrième circuit de conversion analogique/numérique 319.

Le senseur de réception 203 comporte un calculateur électronique 332 pour des traitements radar et une fusion des données permettant la détection d'obstacles et de danger de collisions, et un afficheur 334.

Le calculateur électronique 332 est connecté aux sorties respectives de première, deuxième, troisième, quatrième voies numérisées 280, 290, 300, 310, et il est connecté également via une liaison 335 d'activation des groupements rayonnants unitaires au panneau antennaire 204 pour transmettre des commandes d'activation des groupements rayonnants des secteurs de réception et d'émission en fonctions de phases d'activation prédéterminées.

Le calculateur électronique 332 comporte un premier module 336 pour les traitements radar et un deuxième module 338 pour la fusion des données.

Le calculateur électronique 332 est configuré pour commander l'activation des groupements rayonnants des secteurs de réception et d'émission en fonction de phases d'activation prédéterminées.

Le premier module 336 est configuré pour mettre en œuvre une formation de faisceaux de réception par calcul, un filtrage distance et un filtrage Doppler.

Le deuxième module 338 est configuré pour établir et fusionner des cartes direction/distance.

L'afficheur 334 est configuré pour mettre en œuvre un affichage de la situation de proximité de l'aéronef et une mise en évidence des dangers en approche et des alertes.

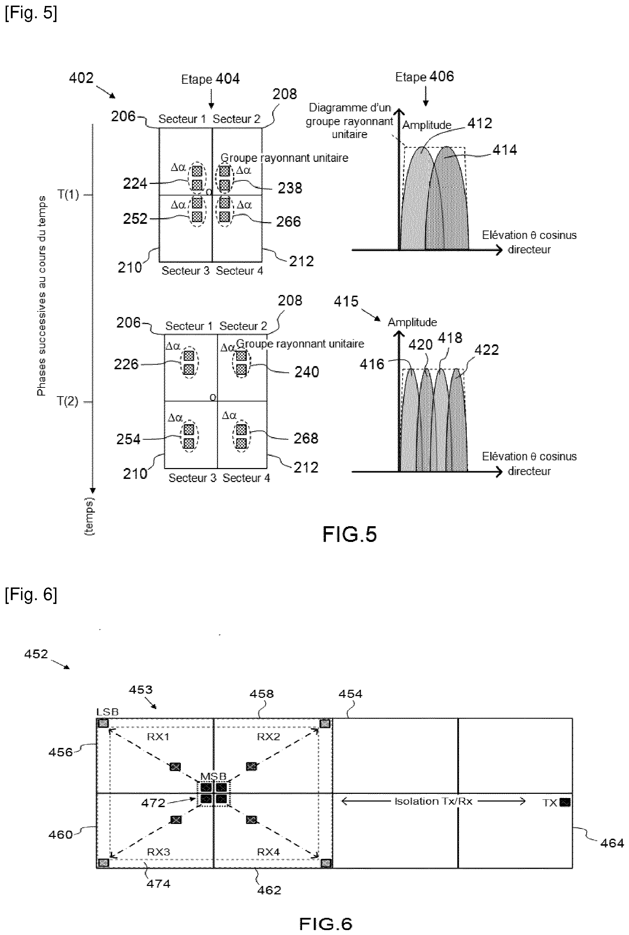

Suivant la Figure 5, un procédé radar de proximité 402 selon un deuxième mode de réalisation de l'invention, mis en œuvre par le système radar de proximité de la Figure 3, comprend ici un ensemble de deux phases temporelles T(1), T(2) d'activation de groupes rayonnants unitaires à raison d'un groupe rayonnant unitaire par secteur de réception de l'antenne de réception et par phase, suivant un motif différent, associé à chaque phase, de répartition géométrique autour du point central O de l'antenne de réception, ici le long d'un axe azimutal et le long d'un axe d'élévation, la distance au point central 0 et l'écart mutuel entre les groupes rayonnants unitaires d'un même motif augmentant lorsque l'ordre de la phase temporelle augmente.

Ici, de manière particulière, pour chaque groupe unitaire rayonnant, une combinaison des deux éléments rayonnants, constituant le groupe unitaire rayonnant et alignés selon la direction donnée par l'axe d'élévation *u_{θ}* , est réalisée au niveau radiofréquence, avant la démodulation et la numérisation. Pour chaque groupe unitaire rayonnant, un même déphasage Δ*α* est appliqué entre les deux éléments rayonnant dudit groupe au niveau radiofréquence, de sorte que le diagramme résultant soit orienté dans une direction particulière donné. Un déphasage Δ*α* positif occasionne un diagramme de rayonnement orienté vers le haut comme décrit sur la Figure 5.

Il est à remarquer qu'un déphasage similaire est également appliqué sur les éléments rayonnants à l'émission. Les éléments rayonnants à l'émission sont ceux d'au moins un secteur émission et peuvent être ceux d'un ou plusieurs des secteurs réception dans le cas d'un radar de proximité mono-statique avec une antenne émission-réception. Dans ce cas l'au moins un secteur émission est inclus dans les secteurs réception.

Les éléments rayonnants à l'émission peuvent également de manière alternative et préférée être ceux d'au moins un secteur émission, séparé et distant des secteurs réception, dans le cas d'un radar bi-statique avec une antenne émission et une antenne réception séparées afin de réaliser de l'émission/réception continue.

Au cours de la phase T(1), dans une première étape 404, les signaux radar reçus par les premier, deuxième, troisième et quatrième secteurs de réception sont numérisés indépendamment et respectivement sur les première, deuxième, troisième et quatrième voies numérisées.

Les premier, troisième, cinquième, septième groupes rayonnants unitaires 224, 238, 252, 266 sont actifs et forment le premier motif de la première phase T(1).

Le diagramme de rayonnement de chaque groupe rayonnant unitaire est identique et il couvre un large domaine angulaire.

Après numérisation, dans une deuxième étape 406, les diagrammes reçus des groupes rayonnants unitaires 224, 238, 252, 266 sont combinés pour former des faisceaux par le calcul. Au cours de la première phase T(1), le diagramme résultant des quatre secteurs combinés est un faisceau large. En fonction du déphasage relatif appliqué aux quatre voies, le faisceau résultant peut être orienté. On peut donc former, en parallèle, ici suivant la direction d'élévation deux faisceaux larges distincts 412, 414, respectivement à gauche et à droite du domaine de couverture.

Pour chacun des deux faisceaux 412, 414, dans une troisième étape non représenté ici sur la Figure 5, un certain nombre de cases-distance sont déclinés dont la taille dépend de la bande passante du signal radar utilisé. L'intensité des retours dans chacune de ces cases et pour chacun des faisceaux permet de détecter les obstacles potentiels, avec une résolution angulaire grossière.

Puis, au cours de la deuxième phase T(2), le premier motif d'activation est remplacé par un deuxième motif d'activation dans lequel les deuxième, quatrième, sixième, huitième groupes rayonnants unitaires, 226, 240, 254, 268 sont actifs. Les première, deuxième, troisième étapes 404, 406, 108 sont alors appliquées en utilisant ce deuxième motif dans lequel les groupes rayonnants 226, 240, 254, 268 sont plus espacés entre eux. Un deuxième diagramme résultant 415 est obtenu à la sortie de la deuxième étape 406 dans lequel deux lobes 416, 418 d'un premier faisceau orienté à gauche et deux lobes 420, 422 d'un deuxième faisceau orienté à, droite sont entrelacés, ce qui permet d'affiner la résolution angulaire de détection du système radar de proximité. Dans la troisième étape, non représenté ici sur la Figure 5, une deuxième cartographie de l'environnement est obtenue dans laquelle les ambigüités associées aux lobes de réseau sont levées grâce à la première cartographie déterminée dans la troisième étape de la première phase T(1).

Suivant le procédé radar de proximité 402, la définition du domaine de couverture du senseur radar est liée à la configuration géométrique du groupe rayonnant unitaire, selon les axes azimut et élévation. La génération des diagrammes de rayonnement synthétiques à l'intérieur du domaine de couverture est liée à la répartition de ces groupes rayonnants unitaires au niveau des secteurs de réception et aux motifs géométriques d'affinage de la résolution du radar au fur et à mesure de l'application des phases temporelles T(k).

En fonction de l'application ou de la phase de vol considérée, on peut donc définir le domaine de couverture ainsi que la résolution angulaire souhaitée, dans les limites physiques du support antennaire disponible et de la répartition des éléments rayonnants.

Suivant une troisième forme de réalisation, une réalisation préférée du système radar de proximité visant à obtenir une bulle de protection du porteur consiste à disposer trois senseurs radar autour du porteur.

Suivant la Figure 6 et la troisième forme de réalisation du système radar de proximité 452, chaque senseur radar 453 comporte un panneau antennaire 454 ayant quatre secteurs de réception 456, 458, 460, 462, disposés en rectangle et répartis angulairement autour d'un point central O, et un secteur d'émission 464 distinct, isolé des secteurs de réception 456, 458, 460, 462.

Un premier secteur de réception Rx1 456, de forme rectangulaire et situé en haut à gauche de l'antenne réception, comporte un nombre entier NK, par exemple égal à 5, de groupes rayonnants unitaires, disposés en série sur la diagonale du premier secteur de réception Rx 1 reliant le coin inférieur droit dudit secteur Rx1 au coin supérieur gauche.

Un deuxième secteur de réception Rx2 458, de forme rectangulaire et situé en haut à droite de l'antenne réception, comporte un même nombre entier NK de groupes rayonnants unitaires, disposés en série sur la diagonale du deuxième secteur de réception Rx2 reliant le coin inférieur gauche dudit secteur Rx2 au coin supérieur droit.

Un troisième secteur de réception Rx3 460, de forme rectangulaire et situé en bas à gauche de l'antenne réception, comporte un même nombre entier NK de groupes rayonnants unitaires, disposés en série sur la diagonale du troisième secteur de réception Rx3 reliant le coin supérieur droit dudit secteur Rx3 au coin inférieur gauche.

Un quatrième secteur de réception Rx4 462, de forme rectangulaire et situé en bas à droite de l'antenne réception, comporte un même nombre entier NK de groupes rayonnants unitaires, disposés en série sur la diagonale du quatrième secteur de réception Rx4 reliant le coin supérieur gauche dudit secteur Rx4 au coin inférieur droit.

Chaque groupe rayonnant de chaque secteur est réduit à un seul élément rayonnant, afin d'illuminer le plus grand secteur angulaire possible.

A l'instar du deuxième mode de réalisation de la Figure 5, le fonctionnement séquentiel du procédé radar de proximité, mis en œuvre par le système radar de la Figure 6, consiste à débuter dans une phase T(1) par des groupes rayonnants rapprochés au point central O de concours entre les quatre secteurs de réception, de sorte à former un premier motif carré 472 de quatre groupe rayonnant unitaire, faiblement espacés entre eux, et de sorte à obtenir des diagrammes synthétiques non ambigus lors de la formation de faisceaux par le calcul. Lors de la phase suivante T(2), les groupes rayonnants sont écartés simultanément en azimut et en élévation, en remplaçant le premier motif, par désactivation de ses quatre groupes rayonnants, par un deuxième motif carré de largeur plus grande, ayant quatre autres groupes rayonnants unitaire, plus éloignés du point central O, pour produire des diagrammes synthétiques avec une largeur de lobe deux fois moindre et l'apparition d'un lobe de réseau. Le procédé radar de proximité se poursuit par progression dichotomique en faisant succéder les phases jusqu'à une dernière phase temporelle, noté ici T(10), dans laquelle le dernier motif 474, ici le dixième correspond à l'écartement maximal disponible des quatre groupes rayonnants à la périphérie de l'antenne de réception. Les diagrammes synthétiques ainsi produits sont orthogonaux et constituent une base binaire permettant d'encoder les directions, à l'instar de ce qui est fait dans la partie de la Figure 2 correspondant à la troisième étape 108.

Il est à remarquer que les limitations dans la levée d'ambigüité proviennent du rapport signal sur bruit disponible dans les échos radar traités. Afin d'améliorer la robustesse et la précision du procédé radar de proximité selon l'invention, un traitement Doppler est réalisé par intégration cohérente du signal.

Si le porteur est en mouvement, la vitesse Doppler induite dans une direction donnée dépend de l'angle entre cette direction et le vecteur vitesse du porteur. Ce traitement est adapté aux phases où le porteur est en déplacement.

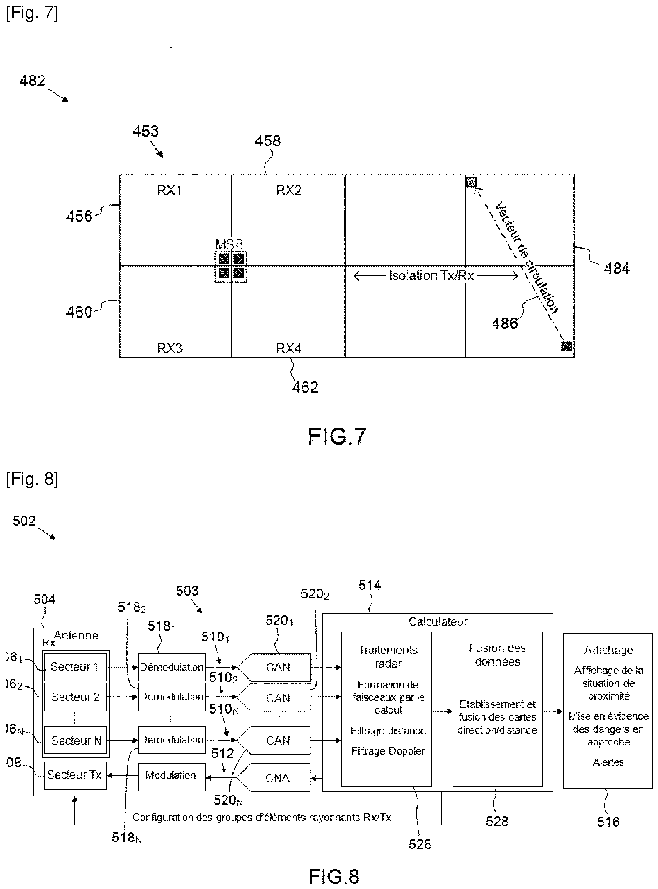

Lors des phases stationnaires ou lors de déplacements à très faible vitesse, l'effet Doppler est a priori inexploitable. Afin de pallier cet inconvénient, l'invention propose de mettre en œuvre une technique d'émission circulante, qui consiste à faire varier dans le secteur émission 484 la position du groupe rayonnant activé à l'émission au cours du temps suivant un vecteur de circulation 486, comme décrit sur la Figure 7, dérivée de la Figure 6 et dans laquelle la structure de l'antenne de réception 456, 458, 460, 462 est conservée à l'identique. Cela occasionne une « Dopplérisation » de l'espace, selon le vecteur utilisé pour réaliser ce déplacement. On retrouve ainsi une dépendance entre la vitesse Doppler mesurée et la direction du signal reçu, ce qui permet d'améliorer les performances de recouvrement des directions d'arrivée.

Suivant la Figure 8 et selon une quatrième forme de réalisation, un système radar de proximité 502 comprend au moins un senseur radar de proximité 503 selon l'invention décrit ci-après.

Le senseur radar de proximité 503 comporte :
- un panneau antennaire 504 formé d'un nombre entier N, supérieur ou égal à 2, de secteurs de réception 506₁, 506₂, ..., 506_{N}, et d'un nombre M, supérieur ou égal à 1, de secteur(s) d'émission 508 ;
- N voies de réception 510₁, 510₂,..., 510_{N}, configurées pour démoduler indépendamment, puis numériser respectivement les N secteurs de réception ;
- M voies d'émission 512, configurées, pour à partir de formes d'ondes radar numérisées à émettre, moduler indépendamment les porteuses radar émises par les M secteur(s) émission ;
- un calculateur électronique 514 pour mettre en œuvre des traitements radar de proximité et une fusion des données de cartes direction/distance ; et
- un afficheur 516 pour afficher la situation de proximité de l'aéronef.

Les N secteurs de réception 506₁, 506₂, ..., 506_{N}, sont répartis angulairement autour d'un point central O prédéterminé (non représenté sur la Figure 8).

Chaque secteur 5061, 5062, ...,506N, 508, en émission comme en réception, comprend un ensemble d'un nombre NK, supérieur ou égal à 2, de groupes rayonnants unitaires identiques, formés chacun d'un même nombre NJ, supérieur ou égal à 1, d'élément(s) rayonnant(s), et ayant un diagramme de rayonnement identique.

Les éléments rayonnants au sein de chaque groupe rayonnant unitaire peuvent être déphasés entre eux de sorte à ce que tous les groupes rayonnants unitaires pointent vers une même direction de pointage.

L'activité des groupes rayonnants unitaires au sein de l'antenne de réception est configurable par le calculateur 514, suivant une succession temporelle T(k) de motifs interférométriques M(k) de N groupes rayonnants unitaires, à raison d'un groupe rayonnant actif par secteur de réception et par motif M(k), k variant de 1 à KN, dans laquelle la distance du motif courant au point central O et l'espacement des groupes rayonnant augmentent lorsque k augmente.

Chaque voie de réception 510₁, 510₂,..., 510_{N}, comporte un démodulateur 518₁, 518₂, ..., 518_{N} et un convertisseur analogique-numérique 520₁, 520₂, ..., 520_{N}, connectés en série aval d'un secteur de réception correspondant 506₁, 506₂, ... 506_{N}.

Le calculateur électronique 514 est configuré par un module des traitements radar 526 pour former dans une phase temporelle T(k) des faisceaux synthétiques par le calcul en combinant les différents secteurs de réception avec des déphasages choisis.

Le calculateur électronique 514 est configuré par un module de fusion des données 528 pour effectuer ensuite dans la même phase T(k) des traitements permettant de discriminer les cases distances et les cases vitesse Doppler, et établir des cartes direction/distance, avec la résolution angulaire rendue disponible par le diagramme de rayonnement issu du motif interférométrique formés par les groupes rayonnants unitaires actifs de l'antenne de réception.

Les groupes rayonnants actifs de l'antenne de réception sont configurés ensuite dans la phases temporelle successive T(k+1) pour obtenir un nouveau diagramme de rayonnement associé à un motif interférométrique successif M(k+1), idéalement orthogonal au motif interférométrique précédent M(k).

Les mêmes traitements que ceux appliqués au motif interférométrique précédent M(k) sont appliqués au motif successif M(k+1), de façon à obtenir une nouvelle carte direction/distance, qui est fusionnée avec la précédente.

Le procédé est répété jusqu'à la résolution souhaitée, puis les données sont envoyées à l'afficheur 516.

L'afficheur 516 est configuré pour signaler les obstacles à proximité de l'aéronef, ainsi que les dérives lentes potentielles du porteur et les mobiles à proximité, avec leur vitesse radiale.

La solution divulguée nécessite au moins une antenne active avec la possibilité de modifier dynamiquement la configuration des éléments rayonnants qui sont activés. Ce type d'antenne peut être employé pour des radars de surveillance, sur des hélicoptères militaires notamment. Avantageusement, le radar de proximité proposé dans cette invention peut le cas échéant utiliser les capacités matérielles d'un tel radar pour réaliser ses fonctions. Le procédé proposé serait dans ce cas un mode de fonctionnement particulier du radar de surveillance, ce qui présenterait des avantages conséquents puisque ces fonctionnalités partageraient un unique matériel, ce qui est très favorable concernant la masse, la consommation, l'encombrement et le coût de l'équipement.

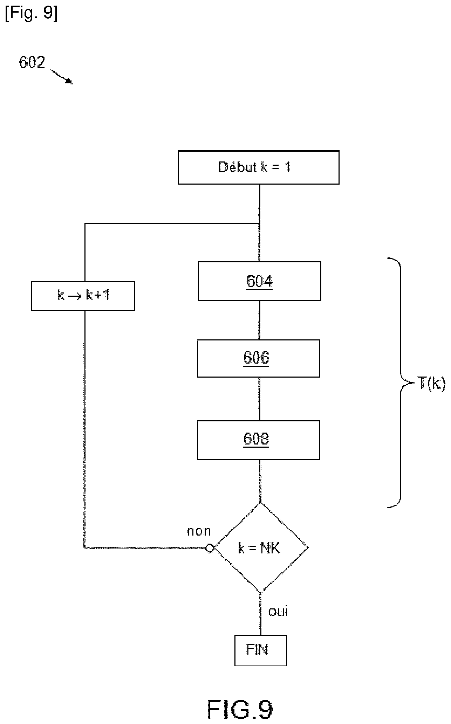

Suivant la Figure 9 et de manière générale, un procédé radar de proximité 602 est mis œuvre par le système radar de proximité de la Figure 8 et comprend un ensemble d'étapes.

Le procédé radar de proximité comprenant une séquence de phases T(k) d'étapes, k variant de 1 à NK, caractérisé en ce que :
- dans une première phase T(1), le calculateur électronique fait activer suivant un premier motif interférométrique M(1), à raison d'un groupe rayonnant actif par secteur réception, N groupes rayonnants actifs, les plus proches du point central O de concours des secteurs de réception, de façon à obtenir des diagrammes synthétiques non ambigus lors d'une formation de faisceaux réception par calcul ; puis
- dans les phases suivantes T(k) d'étapes, exécutées successivement selon l'ordre croissant de k, pour k variant de 2 à NK.

La phase T(k) d'étapes consiste en ce que le calculateur électronique fait activer suivant un motif interférométrique M(k) associé au rang k, à raison d'un groupe rayonnant par secteur réception, N groupes rayonnants actifs associés audit motif M(k), écartés en azimut et/ou en élévation d'autant plus que le rang temporel k est grand, de façon à produire corrélativement des diagrammes synthétiques lors d'une formation de faisceaux réception par calcul avec une largeur de lobe, deux fois moindre que celle des lobes du motif précédent M(k-1), et l'apparition d'un nombre de lobes de réseaux égal à 2 fois 2k-1, et de façon à établir une cartographie de rang k de l'environnement en termes de cases distance/direction azimut et/ou distance/direction élévation dans laquelle les ambiguïtés d'obstacle(s) détecté(s), associées aux lobes de réseaux sont levées grâces au(x) cartographie(s) fournie(s) dans la ou les phases précédent la phase T(k).

Pour chaque phase T(k) d'étapes, k variant de 1 à NK, le calculateur électronique exécute une première étape 604, une deuxième étape 606, et une troisième étape 608.

La première étape 604, exécutée au cours de la phase T(k), consiste en ce que le calculateur électronique fait activer N groupes rayonnants unitaires associés à un motif interférométrique M(k), dans lequel pour k égal à 1, le premier motif M(1) est formé des N groupes rayonnants actifs, à raison d'un groupe rayonnant actif par secteur réception, les plus proches du point central O de concours des secteurs de réception, et pour k compris entre 2 et NK, le motif d'ordre k, M(k), est formé des N groupes rayonnants actifs, à raison d'un groupe rayonnant actif par secteur réception, plus proches voisins qui s'écartent simultanément en azimut et en élévation des groupes rayonnants actifs du précédent motif M(k-1) ; et les signaux reçus par les N secteurs de réception associés au motif M(k) sont démodulés et numérisés indépendamment sur les voies numérisées correspondantes et fournis au calculateur électronique.

La deuxième étape 606, exécutée au cours de la phase T(k), k étant compris entre 1 et NK, consiste en ce que deux faisceaux synthétiques sont formés par calcul par le calculateur électronique à partir des signaux des N secteurs démodulés et numérisés en combinant lesdits N signaux des secteurs de réception par des déphasages adaptés, 2*(2k-1) lobes de réseau étant créées dans lesdits faisceaux synthétiques à partir d'un rang k égal à 2.

La troisième étape 608, exécutée au cours de la phase T(k), consiste en ce que le calculateur établit à partir des faisceaux synthétiques calculés pour le motif M(k) de rang k une cartographie de rang k de l'environnement en termes de cases distance/direction azimut exprimée en cosinus directeur et/ou distance/direction élévation exprimée en cosinus directeur et direction/distance et fusionne la cartographie de rang k avec la cartographie de rang précédent k-1 lorsque k est supérieur ou égal à 2 pour lever d'éventuelles ambigüités d'obstacle(s) détecté(s).

Il est à remarquer que des séquences différentes des phases T(k), k variant de 1 à NK, décrites dans les Figures 2 et 5 ci-desssus dans lesquelles les phases temporelles T(k) sont associées à un écartement croissant avec k, peuvent être envisagées.

Par exemple et suivant une variante, on peut partir d'une phase initiale T(1) où les groupes rayonnants unitaires du premier motif M(1) sont éloignés et ambigus, et continuer le procédé dans les phase suivantes avec des groupes rayonnants unitaires, associés à des motifs suivant M(k), qui se rapprochent au fur et à mesure que k augmente. Dans ce cas, la levée d'ambigüité se fait grâce aux phases T(k) suivantes et non précédentes. Ce procédé semble « moins naturel » mais est équivalent du point de vue du traitement à ceux des formes de réalisation décrites dans Figures 2 et 5, et peut être implémenté. Autrement dit, l'ordre des phases T(k) d'un procédé initial dans lequel l'écartement des groupes rayonnants unitaires en azimut et/ou en élévation augmente peut être remplacé par un ordre quelconque si les motifs M(k), k variant de 1 à NK, constituent une base interférométrique.

Il est à remarquer également que même si lors des différentes phases temporelles, une progression dichotomique est à privilégier idéalement, cette progression dichotomique résultant en un écartement en puissance de 2 et en en un nombre de lobes de réseau en 2k-1, il est possible d'utiliser d'autres écartements, du moment qu'ils permettent de lever les ambigüités.

En particulier, si un réseau antennaire existant avec une distribution de groupes rayonnants unitaires donné est utilisé, les configurations disponibles ne permettront pas de fournir exactement une progression dichotomique mais pourront offrir une progression compatible d'une base interférométrique, exploitable pour détecter des cibles à proximité de l'aéronef.

De manière générale, un procédé radar de proximité pour aéronef à voilure tournante est mis en œuvre par un système radar de proximité comprenant au moins un senseur radar comportant :
- un panneau antennaire, formé d'un nombre entier N supérieur ou égal à 2, de secteurs réception et au moins un secteur(s) émission ; et
- N voies de réception, configurées pour démoduler indépendamment, puis numériser respectivement les N secteurs de réception ; et
- une voie d'émission, configurée pour moduler une forme d'onde émission radar sur une porteuse radar à émettre par l'au moins un secteur(s) émission ;
- un calculateur électronique, configuré pour mettre en œuvre des traitements radar de proximité et une fusion des données de cartes direction/distances ; et
- un afficheur pour afficher la situation de proximité de l'aéronef ;
- les N secteurs de réception étant repartis autour d'un point central O de concours prédéterminé ; et chacun des N secteurs de réception ayant un même nombre NK, supérieur ou égal à 2, de groupes rayonnants unitaires dont la position varie en azimut et/ou en élévation entre le point central O et la périphérie de leur secteur, et pointant vers une même direction de pointage avec un diagramme de rayonnement identique.

Le procédé radar de proximité comprend une séquence de phases T(k) d'étapes, exécutées successivement en fonction de k, k variant de 1 à NK, dans laquelle chaque phase T(k) d'étapes consiste en ce que le calculateur électronique fait activer suivant un motif interférométrique M(k) associé au rang k, à raison d'un groupe rayonnant par secteur réception, N groupes rayonnants actifs associés audit motif interférométrique M(k), dont la position varie en azimut et/ou en élévation en fonction du rang temporel k entre le point central 0 et la périphérie de leur secteur sans repasser par une même position, de façon à produire corrélativement des diagrammes synthétiques lors d'une formation de faisceaux réception par calcul, avec une largeur de lobe et l'apparition d'un nombre de lobes de réseaux qui varient en fonction du rang temporel k, et de façon à établir une cartographie de rang k de l'environnement en termes de cases distance/direction azimut et/ou distance/direction élévation dans laquelle les ambiguïtés d'obstacle(s) détecté(s), associées aux lobes de réseaux sont levées grâces au(x) cartographie(s) fournie(s) dans la ou les phases précédent et/ou suivant la phase T(k).

De manière générale, un système radar de proximité pour aéronef à voilure tournante comprend au moins un senseur radar comportant :
- un panneau antennaire, formé d'un nombre entier N supérieur ou égal à 2, de secteurs réception et au moins un secteur(s) émission ; et
- N voies de réception, configurées pour démoduler indépendamment, puis numériser respectivement les N secteurs de réception ; et
- une voie d'émission, configurée pour moduler une forme d'onde émission radar sur une porteuse radar à émettre par l'au moins un secteur(s) émission ;
- un calculateur électronique, configuré pour mettre en œuvre des traitements radar de proximité et une fusion des données de cartes direction/distances ; et un afficheur pour afficher la situation de proximité de l'aéronef ;
- les N secteurs de réception étant repartis autour d'un point central O de concours prédéterminé ; et chacun des N secteurs réception ayant un même nombre NK, supérieur ou égal à deux, de groupes rayonnants unitaires dont la position varie en azimut et/ou en élévation entre le point central O et la périphérie de leur secteur, et pointant vers une même direction de pointage avec un diagramme de rayonnement identique.

Le calculateur électronique est configuré pour mettre en œuvre un procédé radar de proximité en exécutant une séquence de phases T(k) d'étapes, k variant de 1 à NK, dans laquelle : chaque phase T(k) d'étapes consiste en ce que le calculateur électronique fait activer suivant un motif interférométrique M(k) associé au rang k, à raison d'un groupe rayonnant par secteur réception, N groupes rayonnants actifs associés audit motif interférométrique M(k) dont la position varie en azimut et/ou en élévation en fonction du rang temporel k, de façon à produire corrélativement des diagrammes synthétiques lors d'une formation de faisceaux réception par calcul avec une largeur de lobe, et l'apparition d'un nombre de lobes de réseaux qui varient en fonction du rang temporel k, et de façon à établir une cartographie de rang k de l'environnement en termes de cases distance/direction azimut et/ou distance/direction élévation dans laquelle les ambiguïtés d'obstacle(s) détecté(s), associées aux lobes de réseaux sont levées grâces au(x) cartographie(s) fournie(s) dans la ou les phases précédent et/ou suivant la phase T(k).

## Revendications

1. Procédé radar de proximité pour aéronef à voilure tournante, mis en œuvre par un système radar de proximité comprenant au moins un senseur radar comportant :
- un panneau antennaire (4 ; 204 ; 504), formé d'un nombre entier N supérieur ou égal à 2, de secteurs réception (6, 8 ; 206, 208, 210, 212 ; 506₁, 506₂, ..., 504_{N}) et au moins un secteur(s) émission (508) ; et
- N voies de réception (32, 52 ; 280, 290, 300, 310 ; 510₁, 510₂, ..., 510_{N}), configurées pour démoduler indépendamment, puis numériser respectivement les N secteurs de réception ; et
- une voie d'émission, configurée pour moduler une forme d'onde émission radar sur une porteuse radar à émettre par l'au moins secteur(s) émission ;
- un calculateur électronique (72 ; 332 ; 514), configuré pour mettre en œuvre des traitements radar de proximité et une fusion des données de cartes direction/distances ; et
- un afficheur (74; 334; 516) pour afficher la situation de proximité de l'aéronef ;
les N secteurs de réception (6, 8 ; 206, 208, 210, 212 ; 506₁, 506₂, ..., 504_{N}) étant repartis autour d'un point central O de concours prédéterminé ; et chacun des N secteurs de réception (6, 8 ; 206, 208, 210, 212 ; 506₁, 506₂, ..., 506_{N}) ayant un même nombre NK, supérieur ou égal à 2, de groupes rayonnants unitaires dont la position varie en azimut et/ou en élévation entre le point central O et la périphérie de leur secteur, et pointant vers une même direction de pointage avec un diagramme de rayonnement identique ;
le procédé radar de proximité comprenant une séquence de phases T(k) d'étapes, exécutées successivement en fonction de k, k variant de 1 à NK, dans laquelle :
- chaque phase T(k) d'étapes consiste en ce que le calculateur électronique fait activer suivant un motif interférométrique M(k) associé au rang k, à raison d'un groupe rayonnant par secteur réception, N groupes rayonnants actifs associés audit motif interférométrique M(k), dont la position varie en azimut et/ou en élévation en fonction du rang temporel k entre le point central 0 et la périphérie de leur secteur sans repasser par une même position, de façon à produire corrélativement des diagrammes synthétiques lors d'une formation de faisceaux réception par calcul avec une largeur de lobe et l'apparition d'un nombre de lobes de réseaux qui varient en fonction du rang temporel k, et de façon à établir une cartographie de rang k de l'environnement en termes de cases distance/direction azimut et/ou distance/direction élévation dans laquelle les ambiguïtés d'obstacle(s) détecté(s), associées aux lobes de réseaux sont levées grâces au(x) cartographie(s) fournie(s) dans la ou les phases précédent et/ou suivant la phase T(k).

2. Procédé radar de proximité selon la revendication 1, dans lequel :
- les N secteurs de réception (6, 8 ; 206, 208, 210, 212 ; 506₁, 506₂, ..., 504_{N}) sont répartis angulairement autour d'un point central O de concours prédéterminé ; et
- chacun des N secteurs de réception (6, 8 ; 206, 208, 210, 212 ; 506₁, 506₂, ..., 506_{N}) comporte un même nombre NK, supérieur ou égal à 2, de groupes rayonnants unitaires qui s'écartent en azimut et/ou en élévation vers la périphérie de leur secteur, et pointant vers une même direction de pointage avec un diagramme de rayonnement identique ; et
- la séquence de phases T(k) d'étapes du procédé radar de proximité, k variant de 1 à NK, est **caractérisé en ce que** :
- dans une première phase T(1), le calculateur électronique fait activer suivant un premier motif interférométrique M(1), à raison d'un groupe rayonnant actif par secteur réception, N groupes rayonnants actifs, les plus proches du point central O de concours des secteurs de réception, de façon à obtenir des diagrammes synthétiques non ambigus lors d'une formation de faisceaux réception par calcul ; puis
- dans les phases suivantes T(k) d'étapes, exécutées successivement selon l'ordre croissant de k, pour k variant de 2 à NK,
- la phase T(k) d'étapes consiste **en ce que** le calculateur électronique fait activer suivant un motif interférométrique M(k) associé au rang k, à raison d'un groupe rayonnant par secteur réception, N groupes rayonnants actifs associés audit motif M(k), écartés en azimut et/ou en élévation d'autant plus que le rang temporel k est grand, de façon à produire corrélativement des diagrammes synthétiques lors d'une formation de faisceaux réception par calcul avec une largeur de lobe, deux fois moindre que celle des lobes du motif précédent M(k-1), et l'apparition d'un nombre de lobes de réseaux égal à 2 fois 2k-1, et de façon à établir une cartographie de rang k de l'environnement en termes de cases distance/direction azimut et/ou distance/direction élévation dans laquelle les ambiguïtés d'obstacle(s) détecté(s), associées aux lobes de réseaux sont levées grâces au(x) cartographie(s) fournie(s) dans la ou les phases précédent la phase T(k).

3. Procédé radar de proximité selon la revendication 2, dans
lequel pour chaque phase T(k) d'étapes, k variant de 1 à NK, le calculateur électronique exécute une première étape (104; 404 ; 604), une deuxième étape (106 ; 406 ; 606), et une troisième étape (108 ; 608) ;
la première étape (104 ; 404 ; 604), exécutée au cours de la phase T(k), consistant en ce que le calculateur électronique fait activer N groupes rayonnants unitaires associés à un motif interférométrique M(k), dans lequel pour k égal à 1, le premier motif M(1) est formé des N groupes rayonnants actifs, à raison d'un groupe rayonnant actif par secteur réception, les plus proches du point central O de concours des secteurs de réception, et pour k compris entre 2 et NK, le motif d'ordre k, M(k), est formé des N groupes rayonnants actifs, à raison d'un groupe rayonnant actif par secteur réception, plus proches voisins qui s'écartent simultanément en azimut et en élévation des groupes rayonnants actifs du précédent motif M(k-1) ; et les signaux reçus par les N secteurs de réception associés au motif M(k) sont démodulés et numérisés indépendamment sur les voies numérisées correspondantes et fournis au calculateur électronique ; et
la deuxième étape (106 ; 406 ; 606), exécutée au cours de la phase T(k), k étant compris entre 1 et NK, consistant en ce que deux faisceaux synthétiques sont formés par calcul par le calculateur électronique à partir des signaux des N secteurs démodulés et numérisés en combinant lesdits N signaux des secteurs de réception par des déphasages adaptés, 2*(2k-1) lobes de réseau étant créées dans lesdits faisceaux synthétiques à partir d'un rang k égal à 2 ; et
la troisième étape (108 ; 608), exécutée au cours de la phase T(k), consistant en ce que le calculateur établit à partir des faisceaux synthétiques calculés pour le motif M(k) de rang k une cartographie de rang k de l'environnement en termes de cases distance/direction azimut exprimée en cosinus directeur et/ou distance/direction élévation exprimée en cosinus directeur et direction/distance et fusionne la cartographie de rang k avec la cartographie de rang précédent k-1 lorsque k est supérieur ou égal à 2 pour lever d'éventuelles ambigüités d'obstacle(s) détecté(s).

4. Procédé radar de proximité selon la revendication 3,
comprenant en outre une étape d'affichage exécutée après la troisième étape de chaque phase T(k) à partir d'un rang k prédéterminé supérieur ou égal à 2, dans laquelle
l'afficheur (74 ; 334 ; 516) est configuré pour afficher la situation de proximité de l'aéronef, une mise en évidence des dangers en approche, et des alertes.

5. Procédé radar de proximité selon l'une des revendications 1 à 4, dans lequel
l'au moins un secteur d'émission est inclus dans les secteurs réception et le radar de proximité fonctionne dans un mode mono-statique ; ou l'au moins un secteur d'émission est séparé et distant des secteurs réception et le radar de proximité fonctionne dans un mode bi-statique.

6. Procédé radar de proximité selon la revendication 5, dans lequel
lorsque le radar fonctionne dans un mode bi-statique,
au moins un groupe rayonnant unitaire émission, configuré(s) pour pointer dans la même direction de pointage que celle des groupes rayonnants unitaires des secteurs réception et ayant le même diagramme de rayonnement, est activé de manière statique ; et/ou au moins deux groupes rayonnants unitaires émission configuré(s) pour pointer dans la même direction de pointage que celle des groupes rayonnants unitaires des secteurs réception et ayant le même diagramme de rayonnement, sont activés de manière dynamique, en faisant circuler l'activation des groupes rayonnants actifs suivant au moins un vecteur(s) de circulation (486).

7. Système radar de proximité pour aéronef à voilure tournante comprenant au moins un senseur radar comportant :
- un panneau antennaire (4 ; 204 ; 504), formé d'un nombre entier N supérieur ou égal à 2, de secteurs réception (6, 8 ; 206, 208, 210, 212 ; 506₁, 506₂, ..., 506_{N}) et au moins un secteur(s) émission (508) ; et
- N voies de réception (32, 52 ; 280, 290, 300, 310 ; 510₁, 510₂, ..., 510_{N}), configurées pour démoduler indépendamment, puis numériser respectivement les N secteurs de réception ; et
- une voie d'émission (512), configurée pour moduler une forme d'onde émission radar sur une porteuse radar à émettre par l'au moins secteur(s) émission ;
- un calculateur électronique (72 ; 332 ; 514), configuré pour mettre en œuvre des traitements radar de proximité et une fusion des données de cartes direction/distances ; et
- un afficheur (74 ; 334 ; 516) pour afficher la situation de proximité de l'aéronef ;
les N secteurs de réception (6, 8 ; 206, 208, 210, 212 ; 506₁, 506₂, ..., 506_{N}), étant repartis autour d'un point central O de concours prédéterminé ; et chacun des N secteurs réception (6, 8 ; 206, 208, 210, 212 ; 506₁, 506₂, ..., 506_{N}) ayant un même nombre NK, supérieur ou égal à deux, de groupes rayonnants unitaires dont la position varie en azimut et/ou en élévation entre le point central O et la périphérie de leur secteur, et pointant vers une même direction de pointage avec un diagramme de rayonnement identique ;
le calculateur électronique (72 ; 332 ; 514) étant configuré pour mettre en œuvre un procédé radar de proximité en exécutant une séquence de phases T(k) d'étapes, k variant de 1 à NK, dans laquelle
chaque phase T(k) d'étapes consiste en ce que le calculateur électronique fait activer suivant un motif interférométrique M(k) associé au rang k, à raison d'un groupe rayonnant par secteur réception, N groupes rayonnants actifs associés audit motif interférométrique M(k), dont la position varie en azimut et/ou en élévation en fonction du rang temporel k, de façon à produire corrélativement des diagrammes synthétiques lors d'une formation de faisceaux réception par calcul avec une largeur de lobe et l'apparition d'un nombre de lobes de réseaux qui varient en fonction du rang temporel k, et de façon à établir une cartographie de rang k de l'environnement en termes de cases distance/direction azimut et/ou distance/direction élévation dans laquelle les ambiguïtés d'obstacle(s) détecté(s), associées aux lobes de réseaux sont levées grâces au(x) cartographie(s) fournie(s) dans la ou les phases précédent et/ou suivant la phase T(k).

8. Système radar de proximité selon la revendication 7, dans lequel :
- les N secteurs de réception (6, 8 ; 206, 208, 210, 212 ; 506₁, 506₂, ..., 506_{N}), sont répartis angulairement autour d'un point central O de concours prédéterminé ; et
- chacun des N secteurs réception (6, 8 ; 206, 208, 210, 212 ; 506₁, 506₂, ..., 506_{N}) ayant un même nombre NK, supérieur ou égal à deux, de groupes rayonnants unitaires qui s'écartent en azimut et/ou en élévation vers la périphérie de leur secteur pointant vers une même direction de pointage avec un diagramme de rayonnement identique ;
- la séquence de phases T(k) d'étapes, k variant de 1 à NK, est mise en œuvre
en débutant par une première phase T(1) au cours de laquelle le calculateur fait activer suivant un premier motif interférométrique M(1), à raison d'un groupe rayonnant actif par secteur réception, N groupes rayonnants actifs, les plus proches du point central O de concours des secteurs de réception, de façon à obtenir des diagrammes synthétiques non ambigus lors d'une formation de faisceaux réception par calcul ; puis
en exécutant successivement, pour k variant de 2 à NK, les phases T(k),
la phase T(k) d'étapes consistant en ce le calculateur électronique fait activer suivant un motif interférométrique M(k) associé au rang k, à raison d'un groupe rayonnant par secteur réception, N groupes rayonnants actifs associés audit motif M(k), écartés en azimut et/ou en élévation d'autant plus que le rang temporel k est grand, de façon à produire corrélativement des diagrammes synthétiques lors d'une formation de faisceaux réception par calcul avec une largeur de lobe, deux fois moindre que celle des lobes du motif précédent M(k-1), et l'apparition d'un nombre de lobes de réseaux égal à 2 fois 2k-1, et d'établir une cartographie de l'environnement en termes de cases distance/direction azimut et/ou distance/direction élévation dans laquelle les ambiguïtés d'obstacle(s) détecté(s), associées aux lobes de réseaux sont levées grâces au(x) cartographie(s) fournie(s) dans la ou les phases précédent la phase T(k).

9. Système radar de proximité selon l'une des
revendications 7 à 8, dans lequel :
chaque groupe rayonnant unitaire des N secteurs réception est formé d'un unique élément rayonnant, tous les éléments rayonnants des N secteurs de réception ayant un diagramme de rayonnement identiques ; ou
chaque groupe rayonnant unitaire des N secteurs réception est formé d'un même nombre NJ, supérieur ou égal à 2, d'éléments rayonnants, les éléments rayonnants étant espacés entre eux de moins d'une longueur d'onde *λ* de la porteuse radar.

10. Système radar de proximité selon la revendication 9, dans lequel :
chaque groupe rayonnant unitaire des N secteurs réception est formé d'un même nombre NJ, supérieur ou égal à 2, d'éléments rayonnants, les éléments rayonnants étant espacés entre eux de moins d'une longueur d'onde *λ* de la porteuse radar, et tous les groupes rayonnants unitaires sont orientés de manière identique sur le panneau antennaire ; et
les éléments rayonnants formant chaque groupe rayonnant unitaire sont déphasés entre eux par un même réseau de déphaseurs, connectés en parallèle à un même circuit de sommation, de la voie du secteur réception auquel appartient le groupe rayonnant unitaire.

11. Système radar de proximité selon la revendication 10, dans lequel :
chaque groupe rayonnant unitaire des N secteurs réception est formé de deux éléments rayonnants, espacés entre eux de moins d'une longueur d'onde *λ* de la porteuse radar, et alignés entre eux sur le panneau antennaire suivant son axe d'élévation ; et
les deux éléments rayonnants formant chaque groupe rayonnant unitaire sont déphasés entre eux par un même angle Δ*α* de sorte que tous les groupes rayonnant pointent vers une même direction ayant un angle d'élévation non
nul et un angle azimut nul.

12. Système radar de proximité selon l'une des revendications 7 à 11, dans lequel
les NK groupes rayonnants unitaires de chaque secteur de réception sont disposés régulièrement et sensiblement le long de la bissectrice dudit secteur de réception en partant d'une zone proche du point central O et en allant vers la périphérique dudit secteur de réception.

13. Système radar de proximité selon l'une des revendications 7 à 12, dans lequel
au moins un secteur d'émission est inclus dans les secteurs réception et le système radar de proximité est mono-statique ; ou
au moins un secteur d'émission est séparé et distant des secteurs réception et le système radar de proximité fonctionne est bi-statique.

14. Système radar de proximité selon l'une des revendications 7 à 13, dans lequel :
le système radar est bi-statique ; et
au moins un groupe rayonnant unitaire émission, configuré(s) pour pointer dans la même direction de pointage que celle des groupes rayonnants unitaires des secteurs réception et ayant le même diagramme de rayonnement, est ou sont activé(s) de manière statique ; et/ou au moins deux groupes rayonnants unitaires émission, configuré(s) pour pointer dans la même direction de pointage que celle des groupes rayonnants unitaires des secteurs réception et ayant le même diagramme de rayonnement, sont activés de manière dynamique, en faisant circuler l'activation des groupes rayonnants actifs suivant au moins un vecteur(s) de circulation.

15. Système radar de proximité selon l'une des revendications 7 à 14, dans lequel :
Le calculateur électronique (72 ; 332 ; 514) est configuré pour exécuter dans chaque phase T(k) d'étapes, k variant de 1 à Nk, une première étape (104 ; 404 ; 604), une deuxième étape (106 ; 406 ; 606), et une troisième étape (108 ; 608),
la première étape (104 ; 404 ; 604), exécutée au cours de la phase T(k), consistant en ce que le calculateur électronique fait activer N groupes rayonnants unitaires associés à un motif interférométrique M(k), dans lequel pour k égal à 1, le premier motif M(1) est formé des N groupes rayonnants actifs, à raison d'un groupe rayonnant actif par secteur réception, les plus proches du point central O de concours des secteurs de réception, et pour k compris entre 2 et NK, le motif d'ordre k, M(k), est formé des N groupes rayonnants actifs, à raison d'un groupe rayonnant actif par secteur réception, plus proches voisins qui s'écartent en azimut et/ou en élévation des groupes rayonnants actifs du précédent motif M(k-1) ; et les signaux reçus par les N secteurs de réception associés au motif M(k) sont démodulés et numérisés indépendamment sur les voies numérisées correspondantes et fournis au calculateur électronique ; et
la deuxième étape (106 ; 406 ; 606), exécutée au cours de la phase T(k), k étant compris entre 1 et NK, consistant en ce que deux faisceaux synthétiques sont formés par calcul par le calculateur électronique à partir des signaux des N secteurs démodulés et numérisés en combinant lesdits N signaux des secteurs de réception par des déphasages adaptés, 2*(2k-1) lobes de réseau étant créées dans lesdits faisceaux synthétiques à partir d'un rang k égal à 2 ; et
la troisième étape (108 ; 608), exécutée au cours de la phase T(k), consistant en ce que le calculateur établit à partir des faisceaux synthétiques calculés pour le motif M(k) de rang k une cartographie de rang k de l'environnement en termes de cases distance/direction azimut exprimée en cosinus directeur et/ou distance/direction élévation exprimée en cosinus directeur et direction/distance et fusionne la cartographie de rang k avec la cartographie de rang précédent k-1 lorsque k est supérieur ou égal à 2 pour lever d'éventuelles ambigüités d'obstacle(s) détecté(s).

16. Système radar de proximité selon l'une des revendications 7 à 15, dans lequel :
l'afficheur (74 ; 334 ; 516) est configuré pour afficher la situation de proximité de l'aéronef, une mise en évidence des dangers en approche, et des alertes.

17. Système radar de proximité selon l'une des revendications 7 à 16, comprenant trois senseurs radar identiques, disposés autour du porteur de l'aéronef de sorte à former une bulle de protection du porteur.

## Patentansprüche

1. Abstandsradar-Verfahren für ein Drehflügler-Luftfahrzeug, das von einem Abstandsradar-System durchgeführt wird, das mindestens einen Radarsensor umfasst, der Folgendes aufweist:
- ein Antennenfeld (4; 204; 504), gebildet aus einer ganzen Zahl N gleich oder größer 2 von Empfangssektoren (6, 8; 206, 208, 210, 212; 506₁, 506₂, ..., 504_{N}) und mindestens einem Sendesektor (508); und
- N Empfangskanäle (32, 52; 280, 290, 300, 310; 510₁, 510₂, ..., 510_{N}), konfiguriert zum unabhängigen Demodulieren und dann jeweiligen Digitalisieren der N Empfangssektoren; und
- einen Sendekanal, konfiguriert zum Modulieren einer Radarsendewellenform auf einem Radarträger, der von dem mindestens einen Sendesektor gesendet werden soll;
- einen elektronischen Rechner (72; 332; 514), konfiguriert zum Durchführen von Abstandsradarverarbeitungen und einer Fusion von Richtungs-/Entfernungskartendaten; und
- eine Anzeige (74; 334; 516) zum Anzeigen der Abstandssituation des Luftfahrzeugs;
wobei die N Empfangssektoren (6, 8; 206, 208, 210, 212; 506₁, 506₂, ..., 504_{N}) um einen vorbestimmten zentralen Knotenpunkt O verteilt sind; und
jeder der N Empfangssektoren (6, 8; 206, 208, 210, 212; 506₁, 506₂, ... 506_{N}) eine gleiche Anzahl NK, gleich oder größer 2, von Einheitsstrahlungsgruppen hat, deren Position in Azimut und/oder Elevation zwischen dem zentralen Punkt O und der Peripherie ihres Sektors variiert, und die mit einem identischen Strahlungsdiagramm in dieselbe Zielrichtung zeigen;
das Abstandsradar-Verfahren eine Sequenz von Phasen T(k) von Schritten umfasst, die nacheinander in Abhängigkeit von k ausgeführt werden, wobei k von 1 bis NK variiert, wobei:
- jede Phase T(k) von Schritten darin besteht, dass der elektronische Rechner gemäß einem mit dem Rang k assoziierten interferometrischen Muster M(k), in einer Menge von einer Strahlungsgruppe pro Empfangssektor, N mit dem interferometrischen Muster M(k) assoziierte aktive Strahlungsgruppen aktiviert, deren Position in Azimut und/oder Elevation in Abhängigkeit vom Zeitrang k zwischen dem zentralen Punkt O und der Peripherie ihres Sektors variiert, ohne wieder die gleiche Position zu durchlaufen, um bei der Bildung von Empfangsstrahlen korrelativ synthetische Diagramme durch Berechnen mit einer Keulenbreite und dem Auftreten einer in Abhängigkeit vom Zeitrang k Anzahl von variierenden Netzkeulen zu erzeugen, und um eine k-rangige Kartographie der Umgebung in Bezug auf Felder Entfernung/Azimutrichtung und/oder Entfernung/Höhenrichtung zu erstellen, in der die mit den Netzkeulen assoziierten Mehrdeutigkeiten von erkannten Hindernissen durch die Kartographie(n), die in der (den) Phase(n) vor und/oder nach der Phase T(k) bereitgestellt wird (werden), beseitigt werden.

2. Abstandsradar-Verfahren nach Anspruch 1, wobei:
- die N Empfangssektoren (6, 8; 206, 208, 210, 212; 506₁, 506₂, ..., 504_{N}) winkelmäßig um einen vorbestimmten zentralen Knotenpunkt O verteilt sind; und
- jeder der N Empfangssektoren (6, 8; 206, 208, 210, 212; 506₁, 506₂, ..., 506_{N}) eine gleiche Anzahl NK, gleich oder größer 2, von Einheitsstrahlungsgruppen aufweist, die in Azimut und/oder Elevation zur Peripherie ihres Sektors hin abweichen und mit einem identischen Strahlungsdiagramm in eine gleiche Zielrichtung zeigen; und
- die Sequenz von Phasen T(k) von Schritten des Abstandsradar-Verfahrens, wobei k von 1 bis NK variiert, **dadurch gekennzeichnet ist, dass**:
- in einer ersten Phase T(1) der elektronische Rechner gemäß einem ersten interferometrischen Muster M(1), in einer Menge von einer aktiven Strahlungsgruppe pro Empfangssektor, N aktive Strahlungsgruppen aktiviert, die dem zentralen Knotenpunkt O der Empfangssektoren am nächsten liegen, um bei der rechnerischen Bildung von Empfangsstrahlen eindeutige synthetische Diagramme zu erhalten; und dann
- in den folgenden Phasen T(k) von Schritten, die nacheinander in aufsteigender Reihenfolge von k ausgeführt werden, wobei k von 2 bis NK variiert,
- die Phase T(k) von Schritten darin besteht, dass der elektronische Rechner gemäß einem mit dem Rang k assoziierten interferometrischen Muster M(k), in einer Menge von einer Strahlungsgruppe pro Empfangssektor, N mit dem Muster M(k) assoziierte aktive Strahlungsgruppen aktiviert, die in Azimut und/oder Elevation um so mehr abweichen, je größer der Zeitrang k ist, um bei einer Bildung von Empfangsstrahlen durch Berechnen mit einer Keulenbreite korrelativ synthetische Diagramme zu erzeugen, die halb so groß sind wie die der Keulen des vorherigen Musters M(k-1), und dem Auftreten einer Anzahl von Netzkeulen von zweimal 2k-1, und um eine k-rangige Kartographie der Umgebung in Bezug auf Felder Entfernung/Azimutrichtung und/oder Entfernung/Elevationsrichtung zu erstellen, bei der die mit den Netzkeulen assoziierten Mehrdeutigkeiten der erkannten Hindernisse dank der in der (den) Phase(n) vor der Phase T(k) gelieferten Kartographie(n) beseitigt werden.

3. Abstandsradar-Verfahren nach Anspruch 2, wobei für jede Phase T(k) von Schritten, wobei k von 1 bis NK variiert, der elektronische Rechner einen ersten Schritt (104; 404; 604), einen zweiten Schritt (106; 406; 606) und einen dritten Schritt (108; 608) ausführt;
wobei der während der Phase T(k) ausgeführte erste Schritt (104; 404; 604) darin besteht, dass der elektronische Rechner N Einheitsstrahlungsgruppen aktiviert, die mit einem interferometrischen Muster M(k) assoziiert sind, wobei für k gleich 1 das erste Muster M(1) aus N aktiven Strahlungsgruppen, in einer Menge von einer aktiven Strahlungsgruppe pro Empfangssektor, gebildet wird, die dem zentralen Knotenpunkt O von Empfangssektoren am nächsten liegen, und für k zwischen 2 und NK das Muster der Ordnung k, M(k), aus N aktiven Strahlungsgruppen, in einer Menge von einer aktiven Strahlungsgruppen pro Empfangssektor, gebildet wird, die die nächsten Nachbarn sind, die gleichzeitig in Azimut und Elevation von den aktiven Strahlungsgruppen des vorherigen Musters M(k-1) abweichen; und die von den mit dem Muster M(k) assoziierten N Empfangssektoren empfangenen Signale demoduliert und unabhängig voneinander auf den entsprechenden digitalisierten Kanälen digitalisiert und an den elektronischen Rechner geliefert werden; und
der zweite Schritt (106; 406 ; 606), der während der Phase T(k) ausgeführt wird, wobei k zwischen 1 und NK liegt, darin besteht, dass zwei synthetische Strahlen durch Berechnen mit dem elektronischen Rechner auf der Basis der Signale der N demodulierten und digitalisierten Sektoren gebildet werden, indem die N Signale der Empfangssektoren durch geeignete Phasenverschiebungen kombiniert werden, wobei 2*(2k-1) Netzkeulen in den synthetischen Strahlen auf der Basis eines Rangs k gleich 2 erzeugt werden; und
der dritte Schritt (108 ; 608), der während der Phase T(k) ausgeführt wird, darin besteht, dass der Rechner auf der Basis der für das Muster M(k) von Rang k berechneten synthetischen Strahlen eine k-rangige Kartographie der Umgebung in Bezug auf Felder Entfernung/Azimutrichtung, ausgedrückt als Leitkosinus, und/oder Entfernung/Elevationsrichtung, ausgedrückt als Leitkosinus und Richtung/Entfernung, erstellt und die k-rangige Kartographie mit der vorhergehenden k-1-rangigen Kartographie fusioniert, wenn k gleich oder größer 2 ist, um eventuelle Mehrdeutigkeiten von erkannten Hindernissen zu beseitigen.

4. Abstandsradar-Verfahren nach Anspruch 3, das ferner einen Anzeigeschritt umfasst, der nach dem dritten Schritt jeder Phase T(k) auf der Basis eines vorbestimmten Rangs k gleich oder größer 2 ausgeführt wird, wobei
die Anzeige (74; 334; 516) zum Anzeigen der Abstandssituation des Luftfahrzeugs, einer Hervorhebung der sich nähernden Gefahren und von Warnungen konfiguriert ist.

5. Abstandsradar-Verfahren nach einem der Ansprüche 1 bis 4, wobei
der mindestens eine Sendesektor in den Empfangssektoren eingeschlossen ist und das Abstandsradar in einem monostatischen Modus arbeitet; oder
der mindestens eine Sendesektor von den Empfangssektoren getrennt und entfernt ist und das Abstandsradar in einem bistatischen Modus arbeitet.

6. Abstandsradar-Verfahren nach Anspruch 5, wobei,
wenn das Radar in einem bistatischen Modus arbeitet,
mindestens eine Sendeeinheitsstrahlungsgruppe, die zum Zeigen in die gleiche Zielrichtung wie die Einheitsstrahlungsgruppen der Empfangssektoren konfiguriert ist und das gleiche Strahlungsdiagramm hat, statisch aktiv ist; und/oder
mindestens zwei Sendeeenheitsstrahlungsgruppen, die zum Zeigen in die gleiche Zielrichtung wie die Sendeeinheitsstrahlungsgruppen der Empfangssektoren konfiguriert sind und das gleiche Strahlungsdiagramm haben, dynamisch aktiv sind, indem sie die aktiven Strahlungsgruppen entlang mindestens eines Zirkulationsvektors (486) zirkulieren lassen.

7. Abstandsradar-System für Drehflügel-Luftfahrzeuge, das mindestens einen Radarsensor umfasst, der Folgendes aufweist:
- ein Antennenfeld (4; 204; 504), gebildet aus einer ganzen Zahl N gleich oder größer 2, von Empfangssektoren (6, 8; 206, 208, 210, 212; 506₁, 506₂, ..., 506_{N}) und mindestens einem Sendesektor (508); und
- N Empfangskanäle (32, 52; 280, 290, 300, 310; 510₁, 510₂, ..., 510_{N}), konfiguriert zum jeweiligen unabhängigen Demodulieren und dann jeweiligem Digitalisieren der N Empfangssektoren; und
- einen Sendekanal (512), konfiguriert zum Modulieren einer Radarsendewellenform auf einem Radarträger, der von dem mindestens einen Sendesektor gesendet werden soll;
- einen elektronischen Rechner (72; 332; 514), konfiguriert zum Durchführen von Abstandsradar-Verarbeitungen und einer Fusion von Richtungs-/Entfernungskartendaten; und
- eine Anzeige (74; 334; 516) zum Anzeigen der Abstandssituation des Luftfahrzeugs;
wobei die N Empfangssektoren (6, 8; 206, 208, 210, 212; 506₁, 506₂, ..., 506_{N}) um einen vorbestimmten zentralen Knotenpunkt O herum verteilt sind; und
jeder der N Empfangssektoren (6, 8; 206, 208, 210, 212; 506₁, 506₂, ... 506_{N}) eine gleiche Anzahl NK, gleich oder größer 2, von Einheitsstrahlungsgruppen hat, deren Position in Azimut und/oder Elevation zwischen dem zentralen Punkt O und der Peripherie ihres Sektors variiert, und die mit einem identischen Strahlungsdiagramm in dieselbe Zielrichtung zeigen;
wobei der elektronische Rechner (72; 332; 514) zum Durchführen eines Abstandsradar-Verfahrens durch Ausführen einer Sequenz von Phasen T(k) von Schritten konfiguriert ist, wobei k von 1 bis NK variiert, wobei
jede Phase T(k) von Schritten darin besteht, dass der elektronische Rechner gemäß einem mit dem Rang k assoziierten interferometrischen Muster M(k), in einer Menge von einer Strahlungsgruppe pro Empfangssektor, N mit dem interferometrischen Muster M(k) assoziierte aktive Strahlungsgruppen aktiviert, deren Position in Azimut und/oder Elevation in Abhängigkeit vom Zeitrang k variiert, um bei der Bildung von Empfangsstrahlen durch Berechnen mit einer Keulenbreite und dem Auftreten einer in Abhängigkeit vom Zeitrang k Anzahl von variierenden Netzkeulen korrelativ synthetische Diagramme zu erzeugen, und um eine k-rangige Kartographie der Umgebung in Bezug auf Felder Entfernung/Azimutrichtung und/oder Entfernung/Elevationsrichtung zu erstellen, in der die mit den Netzkeulen assoziierten Mehrdeutigkeiten von erkannten Hindernissen durch die Kartographie(n), die in der (den) Phase(n) vor und/oder nach der Phase T(k) bereitgestellt wird (werden), beseitigt werden.

8. Abstandsradar-System nach Anspruch 7, wobei:
- die N Empfangssektoren (6, 8; 206, 208, 210, 212; 506₁, 506₂, ..., 506_{N}) winkelmäßig um einen vorbestimmten zentralen Knotenpunkt O herum verteilt sind; und
- jeder der N Empfangssektoren (6, 8; 206, 208, 210, 212; 506₁, 506₂, ..., 506_{N}) eine gleiche Anzahl NK, gleich oder größer 2, von Einheitsstrahlungsgruppen aufweist, die in Azimut und/oder Elevation zur Peripherie ihres Sektors hin abweichen und mit einem identischen Strahlungsdiagramm in eine gleiche Zielrichtung zeigen;
- die Sequenz von Phasen T(k) von Schritten, wobei k von 1 bis NK variiert, durchgeführt wird, beginnend mit einer ersten Phase T(1), in der der Rechner gemäß einem ersten interferometrischen Muster M(1), in einer Menge von einer aktiven Strahlungsgruppe pro Empfangssektor, N aktive Strahlungsgruppen aktiviert, die dem zentralen Knotenpunkt O der Empfangssektoren am nächsten liegen, um bei der rechnerischen Bildung von Empfangsstrahlen synthetische, eindeutige Diagramme zu erhalten; und dann
unter aufeinander folgender Ausführung, wobei k von 2 bis NK variiert, der Phasen T(k),
- die Phase T(k) von Schritten darin besteht, dass der elektronische Rechner gemäß einem mit dem Rang k assoziierten interferometrischen Muster M(k), in einer Menge von einer Strahlungsgruppe pro Empfangssektor, N mit dem Muster M(k) assoziierte aktive Strahlungsgruppen aktiviert, die in Azimut und/oder Elevation um so mehr abweichen, je größer der Zeitrang k ist, um bei einer Bildung von Empfangsstrahlen durch Berechnen mit einer Keulenbreite korrelativ synthetische Diagramme zu erzeugen, die halb so groß sind wie die der Keulen des vorherigen Musters M(k-1), und dem Auftreten einer Anzahl von Netzkeulen von zweimal 2k-1, und um eine Kartographie der Umgebung in Bezug auf Felder Entfernung/Azimutrichtung und/oder Entfernung/Elevationsrichtung zu erstellen, bei der die mit den Netzkeulen assoziierten Mehrdeutigkeiten der erkannten Hindernisse dank der in der (den) Phase(n) vor der Phase T(k) gelieferten Kartographie(n) beseitigt werden.

9. Abstandsradar-System nach einem der Ansprüche 7 bis 8, wobei:
jede Einheitsstrahlungsgruppe der N Empfangssektoren aus einem einzigen Strahlungselement gebildet ist, wobei alle Strahlungselemente der N Empfangssektoren ein identisches Strahlungsdiagramm haben; oder
jede Einheitsstrahlungsgruppe der N Empfangssektoren aus einer gleichen Anzahl NJ, gleich oder größer 2, von Strahlungselementen gebildet ist, wobei die Strahlungselemente um weniger als eine Wellenlänge λ des Radarträgers voneinander beabstandet sind.

10. Abstandsradar-System nach Anspruch 9, wobei:
jede Einheitsstrahlungsgruppe der N Empfangssektoren aus einer gleichen Anzahl NJ, gleich oder größer 2, von Strahlungselementen gebildet wird, wobei die Strahlungselemente um weniger als eine Wellenlänge λ des Radarträgers voneinander beabstandet sind und alle Einheitsstrahlungsgruppen auf dem Antennenfeld identisch ausgerichtet sind; und
die jede Einheitsstrahlungsgruppe bildenden Strahlungselemente untereinander durch dasselbe Netz von Phasenschiebern phasenverschoben werden, die parallel mit derselben Summierungsschaltung des Kanals des Empfangssektors verbunden sind, zu dem die Einheitsstrahlungsgruppe gehört.

11. Abstandsradar-System nach Anspruch 10, wobei:
jede Einheitsstrahlungsgruppe der N Empfangssektoren aus zwei Strahlungselementen gebildet wird, die um weniger als eine Wellenlänge λ des Radarträgers voneinander beabstandet und auf dem Antennenfeld entlang ihrer Elevationsachse zueinander ausgerichtet sind; und
die beiden jede Einheitsstrahlungsgruppe bildenden Strahlungselemente unter demselben Winkel Δα zueinander phasenverschoben sind, so dass alle Strahlungsgruppen in dieselbe Richtung mit einem Elevationswinkel ungleich Null und einem Azimutwinkel Null zeigen.

12. Abstandsradar-System nach einem der Ansprüche 7 bis 11, wobei
die NK Einheitsstrahlungsgruppen jedes Empfangssektors gleichmäßig und im Wesentlichen entlang der Winkelhalbierenden des Empfangssektors ausgehend von einem Bereich nahe dem zentralen Punkt O und in Richtung der Peripherie des Empfangssektors angeordnet sind.

13. Abstandsradar-System nach einem der Ansprüche 7 bis 12, wobei
mindestens ein Sendesektor in den Empfangssektoren eingeschlossen ist und das Abstandsradarsystem monostatisch ist; oder
mindestens ein Sendesektor von den Empfangssektoren getrennt und entfernt ist und das Abstandsradarsystem bistatisch arbeitet.

14. Abstandsradar-System nach einem der Ansprüche 7 bis 13, wobei:
das Radarsystem bistatisch ist; und
mindestens eine Sendeeinheitsstrahlungsgruppe, konfiguriert zum Zeigen in die gleiche Zielrichtung wie die Einheitsstrahlungsgruppen der Empfangssektoren, und die das gleiche Strahlungsmuster hat, statisch aktiv ist oder sind; und/oder
mindestens zwei Sendeeinheitsstrahlungsgruppen, konfiguriert zum Zeigen in die gleiche Zielrichtung wie die Einheitsstrahlungsgruppen der Empfangssektoren, und die das gleiche Strahlungsdiagramm haben, dynamisch aktiv sind, indem die Aktivierung der aktiven Strahlungsgruppen entlang mindestens eines Zirkulationsvektors oder mehrerer Zirkulationsvektoren zirkuliert wird.

15. Abstandsradar-System nach einem der Ansprüche 7 bis 14, wobei:
der elektronische Rechner (72; 332; 514) so konfiguriert ist, dass er in jeder Phase T(k) von Schritten, wobei k von 1 bis Nk variiert, einen ersten Schritt (104; 404; 604), einen zweiten Schritt (106; 406; 606) und einen dritten Schritt (108; 608) ausführt,
wobei der während der Phase T(k) ausgeführte erste Schritt (104; 404; 604) darin besteht, dass der elektronische Rechner N Einheitsstrahlungsgruppen aktiviert, die mit einem interferometrischen Muster M(k) assoziiert sind, wobei für k gleich 1 das erste Muster M(1) aus N aktiven Strahlungsgruppen, in einer Menge von einer aktiven Strahlungsgruppe pro Empfangssektor, gebildet wird, die dem zentralen Knotenpunkt O von Empfangssektoren am nächsten liegen, und für k zwischen 2 und NK das Muster der Ordnung k, M(k), aus N aktiven Strahlungsgruppen, in einer Menge von einer aktiven Strahlungsgruppen pro Empfangssektor, gebildet wird, die die nächsten Nachbarn sind, die gleichzeitig in Azimut und Elevation von den aktiven Strahlungsgruppen des vorhergehenden Musters M(k-1) abweichen; und die von den mit dem Muster M(k) assoziierten N Empfangssektoren empfangenen Signale demoduliert und unabhängig voneinander auf den entsprechenden digitalisierten Kanälen digitalisiert und an den elektronischen Rechner geliefert werden; und
der zweite Schritt (106; 406; 606), der während der Phase T(k) ausgeführt wird, wobei k zwischen 1 und NK liegt, darin besteht, dass zwei synthetische Strahlen durch Berechnen mit dem elektronischen Rechner auf der Basis der Signale der N demodulierten und digitalisierten Sektoren gebildet werden, indem die N Signale der Empfangssektoren durch geeignete Phasenverschiebungen kombiniert werden, wobei 2^{∗}(2k-1) Netzkeulen in den synthetischen Strahlen auf der Basis eines Rangs k gleich 2 erzeugt werden; und
der dritte Schritt (108; 608), der während der Phase T(k) ausgeführt wird, darin besteht, dass der Rechner auf der Basis der für das Muster M(k) von Rang k berechneten synthetischen Strahlen eine k-rangige Kartographie der Umgebung in Bezug auf Felder Entfernung/Azimutrichtung, ausgedrückt als Leitkosinus, und/oder Entfernung/Elevationsrichtung, ausgedrückt als Leitkosinus und Richtung/Entfernung, erstellt und die k-rangige Kartographie mit der vorherigen k-1-rangigen Kartographie fusioniert, wenn k gleich oder größer 2 ist, um eventuelle Mehrdeutigkeiten von erkannten Hindernissen zu beseitigen.

16. Abstandsradar-System nach einem der Ansprüche 7 bis 15, wobei:
die Anzeige (74; 334; 516) zum Anzeigen der Abstandssituation des Luftfahrzeugs, einer Hervorhebung von sich nähernden Gefahren und von Warnungen konfiguriert ist.

17. Abstandsradar-System nach einem der Ansprüche 7 bis 16, umfassend drei identische Radarsensoren, die um den Träger des Luftfahrzeugs herum angeordnet sind, um eine Schutzblase für den Träger zu bilden.

## Claims

1. A proximity radar method for a rotary-wing aircraft, implemented by a proximity radar system comprising at least one radar sensor having:
- an antenna panel (4; 204; 504), formed of a whole number N greater than or equal to 2, of reception sectors (6, 8; 206, 208, 210, 212; 506₁, 506₂, ..., 504_{N}) and at least one emission sector (508); and
- N reception channels (32, 52; 280, 290, 300, 310; 510₁, 510₂, ..., 510_{N}) configured so as to independently demodulate and then respectively digitise the N reception sectors; and
- an emission channel, configured so as to modulate a radar emission waveform on a radar carrier to be emitted by the at least one emission sector;
- an electronic computer (72; 332; 514), configured so as to perform proximity radar processing operations and fuse direction/distance map data; and
- a display (74; 334; 516) for displaying the proximity situation of the aircraft;
the N reception sectors (6, 8; 206, 208, 210, 212; 506₁, 506₂, ..., 504_{N}) being distributed around a predetermined common central point O; and
each of the N reception sectors (6, 8; 206, 208, 210, 212; 506₁, 506₂, ..., 506_{N}) having one and the same number NK, greater than or equal to 2, of unitary radiating groups whose position in terms of azimuth and/or in terms of elevation varies between the central point O and the periphery of their sector, and pointing in one and the same pointing direction with an identical radiation pattern;
the proximity radar method comprising a sequence of phases T(k) of steps, executed successively as a function of k, k varying from 1 to NK, wherein:
each phase T(k) of steps consists in the electronic computer activating, with an interferometric pattern M(k) associated with the rank k, at a rate of one radiating group per reception sector, N active radiating groups associated with said interferometric pattern M(k), whose position in terms of azimuth and/or in terms of elevation varies as a function of the temporal rank k between the central point O and the periphery of their sector without passing through one and the same position again, so as to produce, in correlation, synthetic patterns during computational reception beamforming with a lobe width and the appearance of a number of network lobes that vary as a function of the temporal rank k, and so as to establish a map of rank k of the surroundings in terms of azimuth distance/direction and/or elevation distance/direction cells in which the detected obstacle ambiguities, associated with the network lobes, are removed by virtue of the map(s) provided in the phase or phases preceding and/or following the phase T(k).

2. The proximity radar method according to claim 1, wherein:
- the N reception sectors (6, 8; 206, 208, 210, 212; 506₁, 506₂, ..., 504_{N}) are distributed angularly around a predetermined common central point O; and
- each of the N reception sectors (6, 8; 206, 208, 210, 212; 506₁, 506₂, ..., 506_{N}) has one and the same number NK, greater than or equal to 2, of unitary radiating groups that deviate in terms of azimuth and/or in terms of elevation toward the periphery of their sector, and pointing in one and the same pointing direction with an identical radiation pattern; and
- the sequence of phases T(k) of steps of the proximity radar method, k varying from 1 to NK, is **characterised in that**:
- in a first phase T(1), the electronic computer activates, with a first interferometric pattern M(1), at a rate of one active radiating group per reception sector, N active radiating groups closest to the common central point O of the reception sectors, so as to obtain unambiguous synthetic patterns during computational reception beamforming; and then
- in the following phases T(k) of steps, executed successively in increasing order of k, for k varying from 2 to NK,
- the phase T(k) of steps consists in the electronic computer activating, with an interferometric pattern M(k) associated with the rank k, at a rate of one radiating group per reception sector, N active radiating groups associated with said pattern M(k), deviating more in terms of azimuth and/or in terms of elevation the greater the temporal rank k, so as to produce, in correlation, synthetic patterns during computational reception beamforming with a lobe width half that of the lobes of the preceding pattern M(k-1), and the appearance of a number of network lobes equal to 2 times 2k-1, and so as to establish a map of rank k of the surroundings in terms of azimuth distance/direction and/or elevation distance/direction cells in which the detected obstacle ambiguities, associated with the network lobes, are removed by virtue of the map(s) provided in the phase or phases preceding the phase T(k).

3. The proximity radar method according to claim 2, wherein, for each phase T(k) of steps, k varying from 1 to NK, the electronic computer executes a first step (104; 404; 604), a second step (106; 406; 606) and a third step (108; 608);
the first step (104; 404; 604), executed in the phase T(k), consisting in the electronic computer activating N unitary radiating groups associated with an interferometric pattern M(k), wherein, for k equal to 1, the first pattern M(1) is formed of the N active radiating groups, at a rate of one active radiating group per reception sector, that are closest to the common central point O of the reception sectors, and for k between 2 and NK, the pattern of order k, M(k), is formed of the closest adjacent N active radiating groups, at a rate of one active radiating group per reception sector, that deviate simultaneously in terms of azimuth and in terms of elevation from the active radiating groups of the preceding pattern M(k-1); and the signals received by the N reception sectors associated with the pattern M(k) are demodulated and digitised independently on the corresponding digitised channels and supplied to the electronic computer; and
the second step (106; 406; 606), executed in the phase T(k), k being between 1 and NK, consisting in two synthetic beams being formed through computation by the electronic computer on the basis of the signals from the N demodulated and digitised sectors by combining said N signals from the reception sectors by suitable phase-shifting operations, 2^{∗}(2k-1) network lobes being created in said synthetic beams starting from a rank k equal to 2; and
the third step (108; 608), executed in the phase T(k), consisting in the computer establishing, on the basis of the synthetic beams computed for the pattern M(k) of rank k, a map of rank k of the surroundings in terms of azimuth distance/direction cells expressed as a direction cosine and/or elevation distance/direction cells expressed as a direction and direction/distance cosine and fusing the map of rank k with the map of preceding rank k-1 when k is greater than or equal to 2 in order to remove possible detected obstacle ambiguities.

4. The proximity radar method according to claim 3, further comprising a display step executed after the third step of each phase T(k) starting from a predetermined rank k greater than or equal to 2, wherein
the display (74; 334; 516) is configured so as to display the proximity situation of the aircraft, highlight approaching hazards and warnings.

5. The proximity radar method according to one of claims 1 to 4, wherein
the at least one emission sector is included in the reception sectors and the proximity radar operates in a monostatic mode; or
the at least one emission sector is separate and remote from the reception sectors and the proximity radar operates in a bistatic mode.

6. The proximity radar method according to claim 5, wherein
when the radar operates in a bistatic mode,
at least one unitary emission radiating group, configured so as to point in the same pointing direction as that of the unitary radiating groups of the reception sectors and having the same radiation pattern, is activated statically; and/or
at least two unitary emission radiating groups configured so as to point in the same pointing direction as that of the unitary radiating groups of the reception sectors and having the same radiation pattern are activated dynamically, by making the activation of the radiating groups circulate along at least one circulation vector (486).

7. A proximity radar system for a rotary-wing aircraft comprising at least one radar sensor having:
- an antenna panel (4; 204; 504), formed of a whole number N greater than or equal to 2 of reception sectors (6, 8; 206, 208, 210, 212; 506₁, 506₂, ..., 506_{N}) and at least one emission sector (508); and
- N reception channels (32, 52; 280, 290, 300, 310; 510₁, 510₂, ..., 510_{N}) configured so as to independently demodulate and then respectively digitise the N reception sectors; and
- an emission channel (512), configured so as to modulate a radar emission waveform on a radar carrier to be emitted by the at least one emission sector;
- an electronic computer (72; 332; 514), configured so as to perform proximity radar processing operations and fuse direction/distance map data; and
- a display (74; 334; 516) for displaying the proximity situation of the aircraft;
the N reception sectors (6, 8; 206, 208, 210, 212; 506₁, 506₂, ..., 506_{N}) being distributed around a predetermined common central point O; and
each of the N reception sectors (6, 8; 206, 208, 210, 212; 506₁, 506₂, ..., 506_{N}) having one and the same number NK, greater than or equal to 2, of unitary radiating groups whose position in terms of azimuth and/or in terms of elevation varies between the central point O and the periphery of their sector, and pointing in one and the same pointing direction with an identical radiation pattern;
the electronic computer (72; 332; 514) being configured so as to implement a proximity radar method by executing a sequence of phases T(k) of steps, k varying from 1 to NK, wherein
each phase T(k) of steps consists in the electronic computer activating, with an interferometric pattern M(k) associated with the rank k, at a rate of one radiating group per reception sector, N active radiating groups associated with said interferometric pattern M(k), whose position in terms of azimuth and/or in terms of elevation varies as a function of the temporal rank k so as to produce, in correlation, synthetic patterns during computational reception beamforming with a lobe width and the appearance of a number of network lobes that vary as a function of the temporal rank k, and so as to establish a map of rank k of the surroundings in terms of azimuth distance/direction and/or elevation distance/direction cells in which the detected obstacle ambiguities, associated with the network lobes, are removed by virtue of the map(s) provided in the phase or phases preceding and/or following the phase T(k).

8. The proximity radar system according to claim 7, wherein:
- the N reception sectors (6, 8; 206, 208, 210, 212; 506₁, 506₂, ..., 506_{N}) are distributed angularly around a predetermined common central point O; and
- each of the N reception sectors (6, 8; 206, 208, 210, 212; 506₁, 506₂, ..., 506_{N}) having one and the same number NK, greater than or equal to 2, of unitary radiating groups that deviate in terms of azimuth and/or in terms of elevation toward the periphery of their sector pointing in one and the same pointing direction with an identical radiation pattern;
- the sequence of phases T(k) of steps, k varying from 1 to NK, is implemented by starting with a first phase T(1) in which the computer activates, with a first interferometric pattern M(1), at a rate of one active radiating group per reception sector, N active radiating groups closest to the common central point O of the reception sectors, so as to obtain unambiguous synthetic patterns during computational reception beamforming; and then
by successively executing, for k varying from 2 to NK, the phases T(k),
the phase T(k) of steps consisting in the electronic computer activating, with an interferometric pattern M(k) associated with the rank k, at a rate of one radiating group per reception sector, N active radiating groups associated with said pattern M(k), deviating more in terms of azimuth and/or in terms of elevation the greater the temporal rank k, so as to produce, in correlation, synthetic patterns during computational reception beamforming with a lobe width half that of the lobes of the preceding pattern M(k-1), and the appearance of a number of network lobes equal to 2 times 2k-1, and so as to establish a map of the surroundings in terms of azimuth distance/direction and/or elevation distance/direction cells in which the detected obstacle ambiguities, associated with the network lobes, are removed by virtue of the map(s) provided in the phase or phases preceding the phase T(k).

9. The proximity radar system according to one of claims 7 to 8, wherein:
each unitary radiating group of the N reception sectors is formed of a single radiating element, all of the radiating elements of the N reception sectors having an identical radiation pattern; or
each unitary radiating group of the N reception sectors is formed of one and the same number NJ, greater than or equal to 2, of radiating elements, the radiating elements being spaced from one another by less than one wavelength *λ* of the radar carrier.

10. The proximity radar system according to claim 9, wherein
each unitary radiating group of the N reception sectors is formed of one and the same number NJ, greater than or equal to 2, of radiating elements, the radiating elements being spaced from one another by less than one wavelength *λ* of the radar carrier, and all of the unitary radiating groups are oriented identically on the antenna panel; and
the radiating elements forming each unitary radiating group are phase-shifted from one another by one and the same network of phase shifters, connected in parallel to one and the same summing circuit, of the channel of the reception sector to which the unitary radiating group belongs.

11. The proximity radar system according to claim 10, wherein:
each unitary radiating group of the N reception sectors is formed of two radiating elements, spaced from one another by less than one wavelength *λ* of the radar carrier, and aligned with one another on the antenna panel along its axis of elevation; and
the two radiating elements forming each unitary radiating group are phase-shifted from one another by one and the same angle Δ*α* such that all of the radiating groups point in one and the same direction having a non-zero elevation angle and a zero azimuth angle.

12. The proximity radar system according to one of claims 7 to 11, wherein
the NK unitary radiating groups of each reception sector are positioned regularly and substantially along the bisector of said reception sector, starting from an area close to the central point O and going toward the periphery of said reception sector.

13. The proximity radar system according to one of claims 7 to 12, wherein
at least one emission sector is included in the reception sectors and the proximity radar system is monostatic; or
at least one emission sector is separate and remote from the reception sectors and the proximity radar system is bistatic.

14. The proximity radar system according to one of claims 7 to 13, wherein
the radar system is bistatic; and
at least one unitary emission radiating group, configured so as to point in the same pointing direction as that of the unitary radiating groups of the reception sectors and having the same radiation pattern, is or are activated statically; and/or
at least two unitary emission radiating groups, configured so as to point in the same pointing direction as that of the unitary radiating groups of the reception sectors and having the same radiation pattern, are activated dynamically, by making the activation of the active radiating groups circulate along at least one circulation vector.

15. The proximity radar system according to one of claims 7 to 14, wherein:
the electronic computer (72; 332; 514) is configured so as to execute, in each phase T(k) of steps, k varying from 1 to Nk, a first step (104; 404; 604), a second step (106; 406; 606) and a third step (108; 608),
the first step (104; 404; 604), executed in the phase T(k), consisting in the electronic computer activating N unitary radiating groups associated with an interferometric pattern M(k), wherein, for k equal to 1, the first pattern M(1) is formed of the N active radiating groups, at a rate of one active radiating group per reception sector, that are closest to the common central point O of the reception sectors, and for k between 2 and NK, the pattern of order k, M(k), is formed of the closest adjacent N active radiating groups, at a rate of one active radiating group per reception sector, that deviate in terms of azimuth and/or in terms of elevation from the active radiating groups of the preceding pattern M(k-1); and the signals received by the N reception sectors associated with the pattern M(k) are demodulated and digitised independently on the corresponding digitised channels and supplied to the electronic computer; and
the second step (106; 406; 606), executed in the phase T(k), k being between 1 and NK, consisting in two synthetic beams being formed through computation by the electronic computer on the basis of the signals from the N demodulated and digitised sectors by combining said N signals from the reception sectors by suitable phase-shifting operations, 2^{∗}(2k-1) network lobes being created in said synthetic beams starting from a rank k equal to 2; and
the third step (108; 608), executed in the phase T(k), consisting in the computer establishing, on the basis of the synthetic beams computed for the pattern M(k) of rank k, a map of rank k of the surroundings in terms of azimuth distance/direction cells expressed as a direction cosine and/or elevation distance/direction cells expressed as a direction and direction/distance cosine and fusing the map of rank k with the map of preceding rank k-1 when k is greater than or equal to 2 in order to remove possible detected obstacle ambiguities.

16. The proximity radar system according to one of claims 7 to 15, wherein:
- the display (74; 334; 516) is configured so as to display the proximity situation of the aircraft, highlight approaching hazards and warnings.

17. The proximity radar system according to one of claims 7 to 16, comprising three identical radar sensors, positioned around the carrier of the aircraft so as to form a protective bubble for the carrier.
